# EUROPEAN PATENT APPLICATION

(11) **EP 4 102 789 A1**
(43) Date of publication of application: **14.12.2022**
(21) Application number: 20924929.1
(22) Date of filing: 11.12.2020
(51) Int. Cl.: H04L 12/741, H04L 12/911, H04W 28/26

(54) **MESSAGE TRANSMISSION METHOD AND APPARATUS, AND NETWORK DEVICE**

(30) Priority: 11.03.2020 CN 202010167110; 30.03.2020 CN 202010241303
(71) Applicant: Huawei Technologies Co., Ltd., Shenzhen, Guangdong 518129, (CN)
(72) Inventor: BAO, Lei, Shenzhen, Guangdong 518129, (CN); GU, Rui, Shenzhen, Guangdong 518129, (CN); XU, Juhua, Shenzhen, Guangdong 518129, (CN); CHEN, Xinjun, Shenzhen, Guangdong 518129, (CN); XIAO, Yaqun, Shenzhen, Guangdong 518129, (CN); FANG, Sheng, Shenzhen, Guangdong 518129, (CN); ZHANG, Jie, Shenzhen, Guangdong 518129, (CN)
(74) Representative: MERH-IP Matias Erny Reichl Hoffmann Patentanwälte PartG mbB
(86) International application number: PCT/CN2020/135542
(87) International publication number: WO 2021/179718

(57) **Abstract**

Embodiments of this application disclose a packet transmission method and apparatus, and a network device. Specifically, a first network device obtains identification information corresponding to a service flow, and reserves a forwarding resource based on the identification information. The forwarding resource is used by the first network device to forward the service flow to a second network device. The first network device further sends a packet including the identification information to the second network device, and the second network device reserves a corresponding forwarding resource based on the identification information in the packet. Network devices perform resource reservation hop by hop by sending the packet including the identification information, and do not need to perform resource reservation based on a transmission path that is pre-calculated and planned, so that load of the network device or a controller is reduced, and resource reservation flexibility is improved.

## Description

This application claims priority to Chinese Patent Application No. 202010167110.2, filed with the China National Intellectual Property Administration on March 11, 2020 and entitled "FORWARDING RESOURCE CONTROL METHOD AND DEVICE", and to Chinese Patent Application No. 202010241303.8, filed with the China National Intellectual Property Administration on March 30, 2020 and entitled "PACKET TRANSMISSION METHOD AND APPARATUS, AND NETWORK DEVICE", which are incorporated herein by reference in their entireties.

### TECHNICAL FIELD

This application relates to the field of communication technologies, and in particular, to a packet transmission method and apparatus, and a network device.

### BACKGROUND

During service packet transmission, before a network device sends a service packet, a controller or a source network device may plan a transmission path based on a total available bandwidth and another performance indicator of each network device. After the transmission path is planned, each network device on the transmission path may reserve a specified bandwidth resource based on a control message sent by the controller or according to a protocol between the network devices. When the network device starts to transmit the service packet, each network device on the transmission path forwards the service packet by using the reserved bandwidth resource. However, when there are a large quantity of network services, a large amount of information exchange occurs. Consequently, load of the controller or the network device is heavy, forwarding performance of the network device and flexibility of flow forwarding resource reservation are affected.

### SUMMARY

This application provides a packet transmission method and apparatus, and a network device, to reduce calculation pressure of the network device or a controller, and improve forwarding performance and use flexibility of the network device.

According to a first aspect, this application provides a packet transmission method. The method includes: A first network device obtains identification information and obtains a first forwarding resource based on the identification information, where the first forwarding resource is a forwarding resource required by the first network device to forward a service flow to a second network device. In other words, the first network device reserves the forwarding resource based on the obtained identification information. The first network device may further send a first packet including the identification information to the second network device, so that the second network device reserves the forwarding resource based on the identification information of the first packet. When obtaining a second packet belonging to the service flow, the first network device forwards the second packet to the second network device by using the reserved forwarding resource.

The first network device may be any network device on an end-to-end transmission path of the service flow. When a service flow needs to be transmitted along a transmission path, a current network device that receives the service flow on the transmission path may notify, by sending the first packet, a next-hop network device on the transmission path to perform forwarding resource reservation for a subsequently sent service flow, and the first packet carries identification information used to indicate a forwarding resource that needs to be reserved. The transmission path of the service flow does not need to be planned by a source network device, a controller, or the like based on an available bandwidth resource, another network control parameter, and the like, but is allowed to be dynamically determined based on routing information or the like maintained by each network device, and a forwarding resource of a network device along the transmission path is reserved by using a control packet or a data packet transmitted along the transmission path. This improves flexibility of resource reservation for the service flow, and reduces calculation load pressure of a network device such as the controller.

In a possible implementation, when the first network device includes a head node on the transmission path, the first network device obtains the identification information based on local configuration information or from the controller. When the first network device includes an intermediate forwarding node on the transmission path, the first network device may obtain the identification information from the first packet sent at a previous hop.

In a possible implementation, when the first network device includes the head node on the transmission path, before sending the second packet to the second network device by using the first forwarding resource, the first network device adds identification information corresponding to the service flow to the second packet, so that the second network device determines the reserved forwarding resource based on the identification information of the second packet, and forwards the second packet to a next hop by using the forwarding resource.

In a possible implementation, after obtaining the first forwarding resource based on the identification information of the first packet, the first network device establishes a correspondence between identification information and a first forwarding resource, and stores the correspondence in a forwarding table of the first network device. To be specific, after completing forwarding resource reservation based on the identification information, the first network device stores the correspondence between identification information and a first forwarding resource in the forwarding table, so that a packet of a subsequent service flow is quickly forwarded by using a forwarding resource recorded in the forwarding table.

In a possible implementation, when the first network device reserves the first forwarding resource and establishes the correspondence between identification information and a first forwarding resource, and forwards the second packet that belongs to the service flow, the first network device may directly determine, based on the identification information of the second packet and the correspondence, a first forwarding resource corresponding to the identification information. Then the first network device forwards the second packet to the second network device by using the first forwarding resource.

In a possible implementation, the first network device may perform forwarding resource reservation based on the identification information in the following manner. In one manner, the first network device obtains the first forwarding resource based on a stored correspondence table and the identification information, where the correspondence table includes the correspondence between the identification information and the first forwarding resource. The correspondence table may be pre-stored in the first network device by using configuration, delivery by the controller, or the like before the first network device obtains the identification information corresponding to the service flow. In another manner, the first network device sends a request message to the controller, where the request message includes the identification information. The first network device receives a response message sent by the controller, where the response message includes the first forwarding resource corresponding to the identification information.

In a possible implementation, the first packet may further include attribute information, where the attribute information includes a constraint condition used to obtain the first forwarding resource, for example, a bandwidth, a latency, or a reliability indicator required for forwarding the service flow. When obtaining the first forwarding resource based on the identification information, the first network device determines, based on the attribute information, the first forwarding resource corresponding to the identification information, to ensure that the obtained first forwarding resource meets a requirement for forwarding the service flow.

In a possible implementation, the first packet may alternatively include indication information, where the indication information indicates whether a node on the transmission path has reserved the forwarding resource. The second network device performs a reservation operation of the forwarding resource based on the identification information of the first packet when the indication information in the first packet is a first value. The second network device forwards the second packet based on the identification information of the second packet by using the reserved forwarding resource corresponding to the identification information when the indication information in the second packet is a second value. When the first network device includes the head node, the indication information may be obtained by the first network device through configuration, or may be obtained by another network device such as the controller, or may be automatically determined by the first network device. When the indication information exists, a network device receiving the indication information may determine, based on the indication information, whether the forwarding resource has been reserved. If the indication information indicates that the resource has not been reserved, a node receiving the indication information reserves the resource based on the identification information. If the indication information indicates that the forwarding resource has been reserved, the packet is directly forwarded based on the reserved forwarding resource. Therefore, the resource reservation operation is prevented from being repeatedly performed, and packet processing efficiency is improved.

In a possible implementation, there may be an application scenario in which the first network device is corresponding to a plurality of next-hop network devices. In this application scenario, to implement load balancing of the service flow, the first network device may reserve, based on the identification information and a preconfigured load balancing policy, a forwarding resource reaching each next-hop network device. For example, the first network device is separately corresponding to the second network device and a third network device, and the load balancing is formed between the second network device and the third network device. The first network device reserves the first forwarding resource reaching the second network device, and reserves a second forwarding resource reaching the third network device. After obtaining the service flow, the first network device may divide the service flow into two parts proportionally according to the load balancing policy. For example, the second packet belongs to a first part of the service flow, a third packet belongs to a second part of the service flow, and both the second packet and the third packet include same identification information. The first network device obtains the first forwarding resource and the second forwarding resource based on the identification information, forwards the second packet to the second network device by using the reserved first forwarding resource, and forwards the third packet to the third network device by using the reserved second forwarding resource.

In a possible implementation, after determining the first forwarding resource and the second forwarding resource based on the identification information and the load balancing policy, the first network device establishes a correspondence between the identification information and each of the first fonvarding resource and the second forwarding resource, and stores the correspondence in the forwarding table of the first network device, so that a subsequent service flow can be quickly forwarded by using the forwarding resource in a load balancing scenario.

In a possible implementation, the first packet may further include authentication information and resource release information. The authentication information is used to ensure use security of the first network device. When an authentication result of the first network device is that authentication succeeds, the first network device may reserve the forwarding resource and forward a service flow packet by using the reserved forwarding resource. The resource release information indicates the first network device to release the reserved forwarding resource based on a preset resource release period, to ensure that the first network device can reclaim the forwarding resource in time, to apply for a forwarding resource for other service flows that needs to be forwarded subsequently, thereby improving a resource scheduling capability of the network device.

In a possible implementation, when the first packet includes the authentication information, the first network device obtains an authentication result based on the authentication information after receiving the first packet from a fourth network device. When the authentication result is that authentication succeeds, the first network device reserves the first forwarding resource based on the identification information; or when the authentication result is that the authentication fails, the first network device does not perform a resource reservation operation, and only forwards the first packet. In specific implementation, the second packet may further include the authentication information. The authentication information is, for example, updated authentication information. After receiving the second packet, the first network device obtains an authentication result based on the authentication information in the second packet. When the authentication result obtained based on the updated authentication information in the second packet is that authentication succeeds, the first network device may determine, based on the identification information of the second packet, the reserved forwarding resource corresponding to the identification information, and forward the second packet by using the forwarding resource.

In a possible implementation, when the first packet includes the resource release information, the first network device may release the reserved first forwarding resource when no packet belonging to the service flow is received within the time period indicated by the resource release information, so that the first network device can reclaim the forwarding resource in time.

In a possible implementation, when the first network device and the second network device belong to different network domains, before the first network device receives the first packet from the fourth network device and sends the first packet to the second network device, the first network device obtains the identification information based on identification information that is before updating and that is included in the first packet. Then, the identification information before updating in the first packet is replaced with the identification information, so that the second network device can identify the identification information. The identification information before updating is applied to a network domain to which the first network device and the fourth network device belong, and the identification information is applied to a network domain to which the second network device belongs, thereby ensuring proper reservation of forwarding resources in a cross-domain scenario.

In a possible implementation, the first packet may alternatively be the service flow packet. In other words, the first network device may alternatively perform forwarding resource reservation based on the service flow packet, to implement hop-by-hop resource in-band reservation.

According to a second aspect, this application provides a packet transmission apparatus, where the apparatus is used in a network device, including: a first obtaining unit, configured to obtain identification information; a first sending unit, configured to send a first packet to a second network device, where the first packet includes the identification information, and the identification information corresponds to a service flow; a second obtaining unit, configured to obtain a first forwarding resource based on the identification information of the first packet, where the first forwarding resource is a resource required by the first network device to forward the service flow to the second network device; and a second sending unit, configured to send a second packet to the second network device by using the first forwarding resource, where the second packet belongs to the service flow, and the second packet includes the identification information. The first packet carries identification information indicating a forwarding resource that needs to be reserved. A transmission path of the service flow does not need to be planned by a head node, a controller, or the like based on an available bandwidth resource, another network control parameter, or the like, but is allowed to be dynamically determined based on routing information or the like maintained by each network device, and a forwarding resource of a network device along the transmission path is reserved by using a control packet or a data packet transmitted along the transmission path. This improves flexibility of resource reservation for the service flow.

In a possible implementation, the identification information is obtained by the first obtaining unit based on local configuration information, or is obtained by the first obtaining unit from the controller, or is obtained from the first packet sent by a previous-hop network device of the first network device.

In a possible implementation, the apparatus further includes: an adding unit, configured to: before the second sending unit sends the second packet to the second network device by using the first forwarding resource, add the identification information to the second packet based on that the second packet belongs to the service flow.

In a possible implementation, the apparatus further includes: a storage unit, configured to: after the second obtaining unit obtains the first forwarding resource based on the identification information of the first packet, establish a correspondence between the identification information and the first forwarding resource, and store the correspondence in a fonvarding table of the first network device.

In a possible implementation, the second sending unit includes: a first determining subunit, configured to determine, based on the identification information of the second packet and the correspondence, the first forwarding resource corresponding to the identification information; and a sending subunit, configured to send the second packet to the second network device by using the first forwarding resource.

In a possible implementation, the second obtaining unit includes: a first obtaining subunit, configured to obtain the first forwarding resource based on a stored correspondence table and the identification information, where the correspondence table includes a correspondence between the identification information and the first forwarding resource; or a first sending subunit, configured to send a request message to the controller, where the request message includes the identification information; and a first receiving subunit, configured to receive a response message sent by the controller, where the response message includes the first forwarding resource corresponding to the identification information.

In a possible implementation, the first packet further includes attribute information, where the attribute information includes a constraint condition used to obtain the first forwarding resource, and the second obtaining unit is specifically configured to determine, based on the attribute information, the first forwarding resource corresponding to the identification information.

In a possible implementation, a next hop of the first network device includes the second network device and a third network device, load balancing is formed between the second network device and the third network device, the second packet belongs to a first part of the service flow, and the apparatus further includes: a third obtaining unit, configured to obtain a second forwarding resource based on the identification information, where the second forwarding resource is a resource required by the first network device to forward a second part of the service flow to the third network device; and a third sending unit, configured to send a third packet to the third network device by using the second forwarding resource, where the third packet includes the identification information, and the third packet belongs to the second part of the service flow.

In a possible implementation, the first forwarding resource and the second forwarding resource are determined based on the identification information and a load balancing policy of the first network device.

In a possible implementation, the apparatus further includes: a storage unit, configured to: after the first fonvarding resource and the second forwarding resource are obtained based on the identification information, establish a correspondence between the identification information and each of the first forwarding resource and the second fonvarding resource, and store the correspondence in a forwarding table of the first network device.

In a possible implementation, the first packet further includes either of authentication information and resource release information.

In a possible implementation, the apparatus further includes: a receiving unit, configured to: before the first packet is sent to the second network device, receive the first packet from a fourth network device, where the first packet further includes the authentication information; and a fourth obtaining unit, configured to obtain an authentication result based on the authentication information, where when the authentication result is that authentication succeeds, the second obtaining unit obtains the first forwarding resource based on the identification information of the first packet. The fourth network device may be a previous-hop device of the first network device, or when one or more transparent transmission network devices are included between the fourth network device and the first network device, the fourth network device is an upstream device of the first network device.

In a possible implementation, the apparatus further includes: a receiving unit, configured to: before the first packet is sent to the second network device, receive the first packet from a fourth network device, where the first packet further includes the resource release information; and a release unit, configured to: when no packet that belongs to the service flow is received within a time period indicated by the resource release information, release, by the first network device, the first forwarding resource.

In a possible implementation, when the first network device and the second network device belong to different network domains, the apparatus further includes: a receiving unit, configured to: before the first packet is sent to the second network device, receive the first packet from a fourth network device, where the first packet includes identification information before updating, and the identification information before updating is applied to a network domain to which the first network device and the fourth network device belong; a fifth obtaining unit, configured to obtain the identification information based on the identification information before updating, where the identification information is applied to a network domain to which the second network device belongs; and a replacement unit, configured to replace the identification information before updating in the first packet with the identification information.

In a possible implementation, the first packet also belongs to the service flow.

According to a third aspect, this application provides a network device, and the device includes a processor and a memory.

The memory is configured to store instructions. The processor is configured to execute the instructions in the memory, to perform the method according to the first aspect.

According to a fourth aspect, this application provides a network device. The device includes a processor. The processor is configured to execute instructions stored in a memory, to perform the method according to the first aspect. The memory may be located inside the network device, or may be located outside the network device, for example, a cloud device.

According to a fifth aspect, this application provides a chip, including a processor and an interface circuit. The interface circuit is configured to receive instructions and transmit the instructions to the processor. The processor is configured to perform an instruction writing method according to the first aspect.

According to a sixth aspect, this application provides a computer-readable storage medium. The computer-readable storage medium stores program code or instructions. When the program code or the instructions are run on a computer, the computer is enabled to perform the method according to the first aspect.

According to the technical solutions of this application, before forwarding the second packet corresponding to the service flow, the first network device obtains the identification information, and reserves the first forwarding resource based on the identification information. The first forwarding resource is used by the first network device to forward the service flow corresponding to the identification information to the second network device. At the same time, the first network device sends the first packet including the identification information to the second network device, so that the second network device reserves the forwarding resource based on the identification information of the first packet. When receiving the second packet that belongs to the service flow corresponding to the identification information, the first network device forwards the second packet to the second network device by using the first fonvarding resource. It can be learned that according to the packet transmission method provided in embodiments of this application, network devices perform forwarding resource reservation hop by hop by sending the first packet including the identification information, to forward, by using the fonvarding resource, the second packet that belongs to the service flow. According to the technical solutions of this application, the fonvarding resource reservation does not need to be performed based on a specified transmission path that is pre-calculated and planned, or by using a protocol packet between devices, a control packet sent by the controller, or the like. This not only can reduce load of the network device or the controller, but also can improve resource reservation flexibility and packet fonvarding performance.

### BRIEF DESCRIPTION OF DRAWINGS

To describe the technical solutions in embodiments of this application or in the conventional technology ore clearly, the following briefly describes the accompanying drawings used to describe embodiments or the conventional technology. It is clear that the accompanying drawings in the following descriptions show some embodiments of this application, and a person of ordinary skill in the art may still derive other drawings from these accompanying drawings without creative efforts.
FIG. 1 is a schematic diagram of an application scenario according to an embodiment of this application;
FIG. 2A and FIG. 2B are a schematic flowchart of a packet transmission method according to an embodiment of this application;
FIG. 3a is a schematic diagram of a structure of an extension header according to an embodiment of this application;
FIG. 3b is a schematic diagram of defining a position of an extension header according to an embodiment of this application;
FIG. 3c is another schematic diagram of defining a position of an extension header according to an embodiment of this application;
FIG. 4 is a schematic diagram of another application scenario according to an embodiment of this application;
FIG. 5 is a schematic flowchart of another packet transmission method according to an embodiment of this application;
FIG. 6 is a schematic diagram of a structure of a packet transmission apparatus according to an embodiment of this application;
FIG. 7 is a schematic diagram of a structure of a network device according to an embodiment of this application; and
FIG. 8 is a schematic diagram of a structure of another network device according to an embodiment of this application.

### DESCRIPTION OF EMBODIMENTS

Currently, in 5G network application, the following assurance methods are provided to meet a service level agreement (service level agreement, SLA) requirement. SLA is an agreement signed by a user (for example, an individual, an enterprise, or a neighboring internet service provider (internet service provider, ISP) that performs service interaction with a service provider) and the service provider on how a service flow should be treated when being transferred in a network. Currently, to ensure network use experience of the user, a network transmission resource may be reserved for a service flow of the user by using a specific technology.

One is that network devices perform resource reservation negotiation by using the resource reservation protocol-traffic engineering (Resource Reservation Protocol-Traffic Engineering, RSVP-TE). The RSVP-TE protocol is used to establish a label switched path (Label Switched Path, LSP) for a multiprotocol label switching (Multiprotocol Label Switching, MPLS) network. Specifically, the RSVP-TE protocol is deployed on each network device in the MPLS network. The RSVP-TE protocol obtains an LSP tunnel through calculation based on an SLA requirement, for example, a bandwidth of 100 M is required, to indicate the network device to fonvard a service flow by using the specified LSP tunnel. At the same time, a specific bandwidth resource is reserved for each determined LSP tunnel, so that the reserved bandwidth resource is used to perform forwarding on the LSP tunnel. However, in this method, because of complex configuration and negotiation of the RSVP-TE protocol, network devices need to perform protocol interworking and determine a to-be-reserved resource through negotiation. When a service specification is large, a large quantity of protocol interactions cause high system pressure on the network devices. In addition, the RSVP-TE protocol does not support cross-domain bandwidth resource reservation and large-scale networking.

The other is to use a method of centralized calculation based on a software defined network (software defined network, SDN) controller to ensure quality of service of SLA. Specifically, the service provider reports, to the SDN controller, information carrying a quality-of-service requirement, and the SDN controller centrally plans, based on the reported information, a data packet transmission path such as an LSP, and delivers, to each node, information such as a bandwidth required during data packet transmission, to perform resource reservation for subsequent data packet forwarding. However, when a current network structure includes a large quantity of nodes, and the SDN controller performs resource reservation planning, a calculation amount is large, workload of the controller is increased, and this is unfavorable to dynamic adjustment of a forwarding resource. In addition, the SDN controller on the current network needs to communicate with network devices from a plurality of vendors, and it is difficult to promote interface standardization. Consequently, deployment is difficult.

Based on this, an embodiment of this application provides a packet transmission method. When a service flow needs to be transmitted along a transmission path, a network node that receives the service flow on the transmission path may notify, by sending a first packet, a next-hop node on the transmission path to reserve a forwarding resource for the subsequently sent service flow, and the first packet carries identification information indicating a forwarding resource that needs to be reserved. The transmission path of the service flow does not need to be determined in advance by the network nodes through negotiation by using a protocol, and does not need to be planned by a controller, or the like based on an available bandwidth resource, another network control parameter, or the like, but is allowed to be dynamically determined based on routing information or the like maintained by each node during service flow transmission. When the routing information changes after a period of time, the transmission path of the first packet may also change accordingly, so that each node on a changed transmission path reserves a corresponding forwarding resource, and flexibility of resource reservation for the service flow is improved. The first packet may be a control-type packet, for example, an operation, administration, and maintenance (Operation, Administration and Maintenance, OAM) packet, or may be a service-type packet, for example, a 1^{st} packet in a service flow needs to be transmitted, and the following separately provide descriptions.

When the first packet is the control-type packet, a head node first obtains identification information corresponding to the service flow, and obtains, based on the identification information, a forwarding resource corresponding to the identification information, to perform forwarding resource reservation. At the same time, the head node sends the first packet including the identification information to a next-hop node, and the next-hop node obtains the identification information from the first packet, and obtains a forwarding resource based on the identification information to perform resource reservation. The next-hop node sends the first packet including the identification information to a next-hop node corresponding to the next-hop node successively, until each node on an entire transmission path from the head node to a tail node performs forwarding resource reservation. When service flow transmission starts, the head node may add the identification information to a packet included in the service flow, and each node on the transmission path determines a reserved forwarding resource based on the identification information in the packet, and forwards the packet to a next-hop node by using the reserved forwarding resource. Because a transmission path of the first packet is actually determined by each node along the path based on local routing information, after the first packet including the identification information indicates each node along the path to reserve a corresponding forwarding resource, the service flow may be generally transmitted along the same transmission path based on the same local routing information. In addition, because the packet included in the service flow includes the same identification information, the service flow may be transmitted by using the reserved forwarding resource.

When the first packet is the sendee-type packet, for example, the 1^{st} packet of the service flow, the head node first obtains the identification information corresponding to the service flow, obtains a fonvarding resource based on the identification information for resource reservation, and forwards the first packet including the identification information to a next-hop node. The next-hop node obtains the identification information from the first packet, obtains the forwarding resource based on the identification information to perform resource reservation, and forwards the first packet to a next-hop node corresponding to the next-hop node successively, until the first packet is transmitted to the tail node. In a possible implementation, after reserving a fonvarding resource, each node may forward the first packet to the next-hop node by using the reserved forwarding resource. Therefore, a network system can achieve fonvarding resource reservation based on the service flow, and does not need to perform forwarding resource reservation based on a specified transmission path that is pre-calculated and planned.

According to embodiments of this application, the network system does not need to perform forwarding resource reservation based on the specified transmission path that is pre-calculated and planned, and this improves flexibility and timeliness of service flow transmission and forwarding resource configuration, and reduces calculation pressure of a controller or a network device such as the head node.

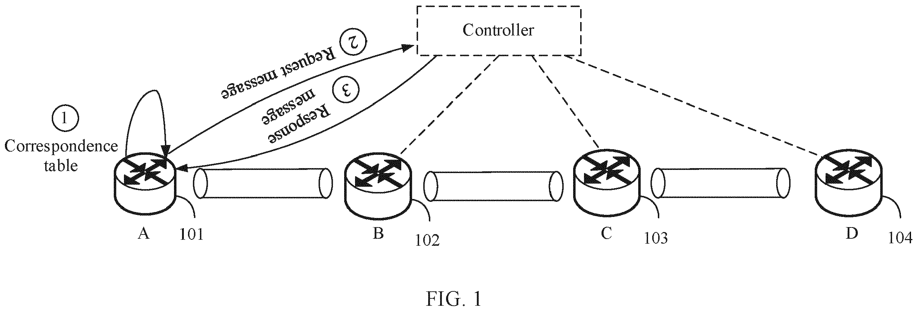

Refer to FIG. 1. In a possible case, a network device may also be referred to as a node, and is a device that provides a routing and forwarding function in a network system. For example, the network device may be a router, a switch, a forwarder, or a label switching router (label switching router, LSR). This is not limited. In FIG. 1, an example in which the network system includes four network devices: a network device A, a network device B, a network device C, and a network device D is used. The network device A is a head node 101, both the network device B and the network device C are intermediate forwarding nodes, which are respectively referred to as a first forwarding device 102 and a second forwarding device 103, and the network device D is a tail node 104. In the foregoing case, that the node is an independent network device is used as an example. In another case, the node may alternatively be a functional module that has a packet forwarding capability in the network device. In this case, one network device may include a plurality of nodes.

For ease of understanding embodiments of this application, the following first explains meanings of a head node, an intermediate node, and a tail node.

On a complete end-to-end transmission path of a packet in a service flow, the packet may successively pass through the head node, the intermediate node, and the tail node.

For the head node, in one case, the head node may be a node that generates the packet. To be specific, when the head node is a node (source user equipment) corresponding to a source address of the packet, the head node is a 1^{st} node on the end-to-end transmission path of the packet, and when generating the packet, the head node adds identification information used for forwarding resource reservation. In another case, when the packet is initially generated and sent by user equipment, a source address of the packet may be a source address of the user equipment, and the head node may be a node connected to the user equipment, and is configured to add identification information used for resource reservation to the packet. In still another case, the head node may alternatively be a 1^{st} node that has a capability of identifying identification information used for resource reservation and that may add the identification information to the packet on the end-to-end transmission path, or the like.

For the tail node, in one case, the tail node may be a node (destination user equipment) corresponding to a destination address of the packet. In another case, the tail node may alternatively be a node connected to the destination user equipment. In another case, the tail node may alternatively be a last node in a current domain range on the end-to-end transmission path. In still another case, the tail node may alternatively be a last node that has a capability of identifying identification information and performing resource reservation on the end-to-end transmission path, or the like. The intermediate node is one or more forwarding nodes that a packet passes through between the head node and the tail node during forwarding.

Transmission of a service flow between two user equipment in a virtual private network (Virtual Private Network, VPN) is used as an example. In this network scenario, the head node may be, for example, a customer edge (customer edge, CE) device connected to user equipment that sends the service flow, or a provider edge (provider edge, PE) device connected to a CE device, and the tail node may be, for example, a CE device or a PE device connected to user equipment that receives the user flow. The head node and the tail node may be located in a same autonomous system (autonomous system, AS) domain, or may be located in different AS domains. There may be no intermediate node, or one or more intermediate nodes between the head node and the tail node. In the foregoing network scenario, for example, the intermediate node may be another PE device or a gateway device.

For ease of understanding the packet transmission method provided in embodiments of this application, the following describes the method with reference to the accompanying drawings.

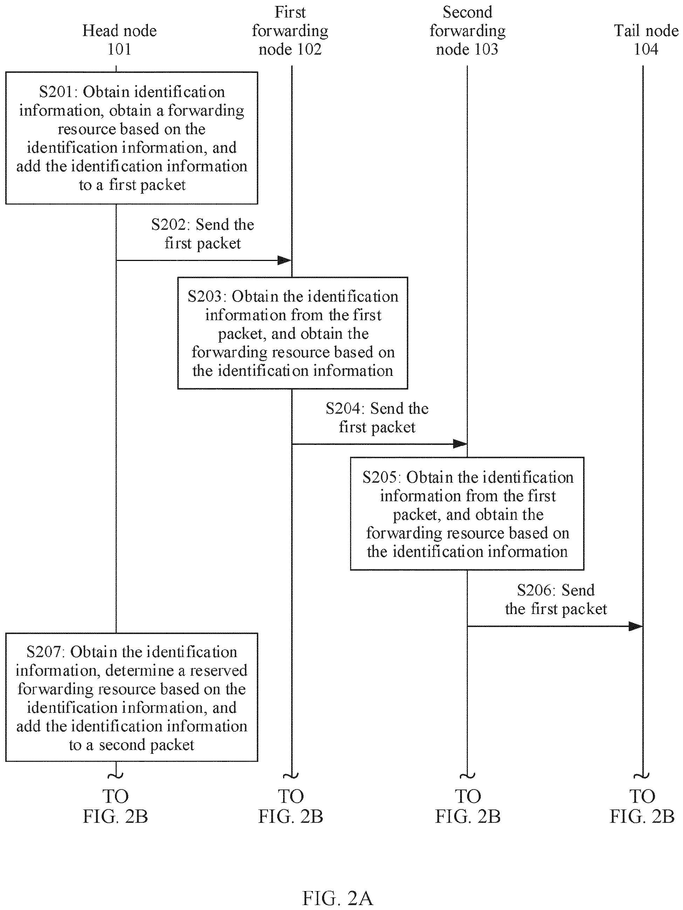

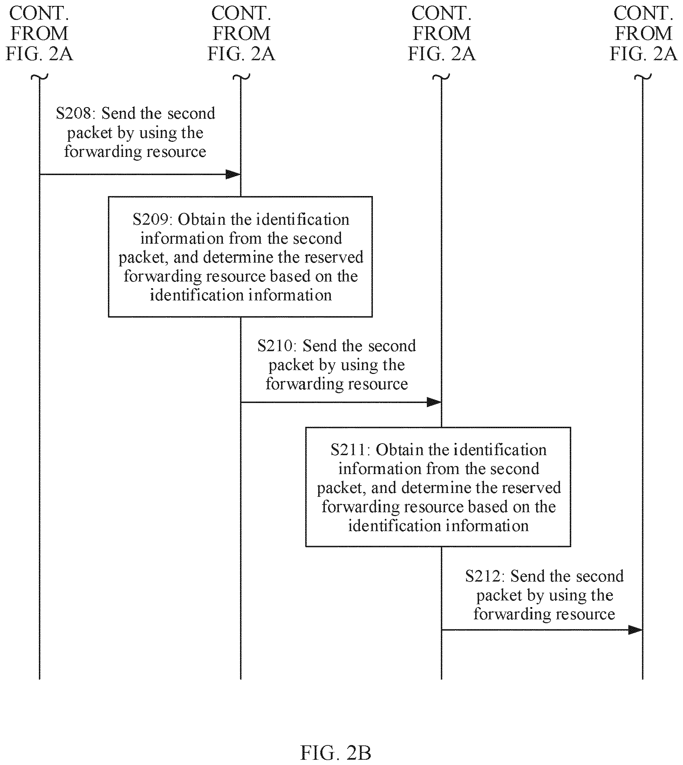

The structure of the network system shown in FIG. 1 is used as an example. FIG. 2A and FIG. 2B are a flowchart of a packet transmission method according to an embodiment of this application. As shown in FIG. 2A and FIG. 2B, the method includes the following steps.

S201: A head node 101 obtains identification information, and obtains a forwarding resource based on the identification information.

The head node 101 first obtains identification information corresponding to a service flow that needs to be transmitted, to obtain a corresponding forwarding resource based on the identification information. In other words, the head node 101 performs forwarding resource reservation based on the identification information.

Specifically, the head node 101 may obtain the identification information from local preconfiguration information. The local preconfiguration information may be, for example, manually configured by a user in the head node 101 based on the service flow that needs to be sent, or may be read by the head node 101 from a locally pre-stored configuration information table. The head node 101 may determine, based on the service flow that needs to be sent and a correspondence between the service flow stored in the configuration information table and the identification information, the identification information corresponding to the service flow. Alternatively, the head node 101 may further obtain the identification information corresponding to the service flow from an external device such as a controller, where the controller pre-stores identification information corresponding to each service flow. For example, a correspondence between a service flow and identification information may be determined based on a service type. For example, service types such as video, audio, and text are respectively corresponding to different identification information. Alternatively, the correspondence may be determined based on a user. For example, different user groups are respectively corresponding to different identification information. Different service flows identified by the different identification information may use different forwarding resources. The head node 101 may obtain the fonvarding resource based on the identification information in the following manners. In one manner, the head node 101 obtains the forwarding resource based on a locally stored correspondence table and the identification information, where the correspondence table includes a correspondence between identification information and a forwarding resource. In other words, the head node 101 searches, based on the obtained identification information and the pre-stored correspondence table, for the forwarding resource corresponding to the identification information. For example, the manner is an obtaining manner corresponding to ① in FIG. 1. In another manner, the head node 101 sends a request message to the controller, where the request message includes the identification information. After receiving the request message including the identification information, the controller searches for a corresponding forwarding resource based on the identification information, and sends a response message including the forwarding resource corresponding to the identification information to the head node, so that the head node 101 obtains the forwarding resource corresponding to the identification information. For example, an obtaining manner corresponding to ② and ③ in FIG. 1. In other words, the head node 101 may obtain forwarding resource information in at least the foregoing two manners, and achieve forwarding resource reservation. The forwarding resource in the foregoing locally stored correspondence table or in the response message sent by the controller may be specifically the forwarding resource itself, for example, a bandwidth, a slot, a quality of service (quality of service, QoS) queue, or a physical port that is allocated to the service flow, or may be resource code, identification information, or the like used to identify the fonvarding resource, so that the head node determines a specific reserved forwarding resource based on the resource code or the identification information of the forwarding resource with reference to a local resource status or the like.

When obtaining the identification information, the head node 101 may further obtain attribute information corresponding to the service flow, where the attribute information includes constraint conditions used to obtain the forwarding resource, for example, a bandwidth, a latency, a jitter rate or a reliability indicator required for fonvarding the service flow. In other words, the attribute information represents an SLA quality-of-service requirement that needs to be met for fonvarding the service flow. When attribute information corresponding to the identification information exists, and when obtaining the fonvarding resource based on the identification information, the head node 101 determines, based on the attribute information, the fonvarding resource corresponding to the identification information. In other words, the head node 101 may obtain, through calculation based on the attribute information, the fonvarding resource corresponding to the identification information.

To reduce calculation pressure of the head node 101, an operation of calculating a fonvarding resource may also be performed by the controller. Specifically, after obtaining the attribute information corresponding to the identification information, the head node 101 may send the request message to the controller, where the request message includes the identification information and the attribute information corresponding to the identification information. After receiving the request message, the controller calculates, based on the attribute information, the fonvarding resource corresponding to the identification information, and then sends, to the head node, the response message including the forwarding resource corresponding to the identification information.

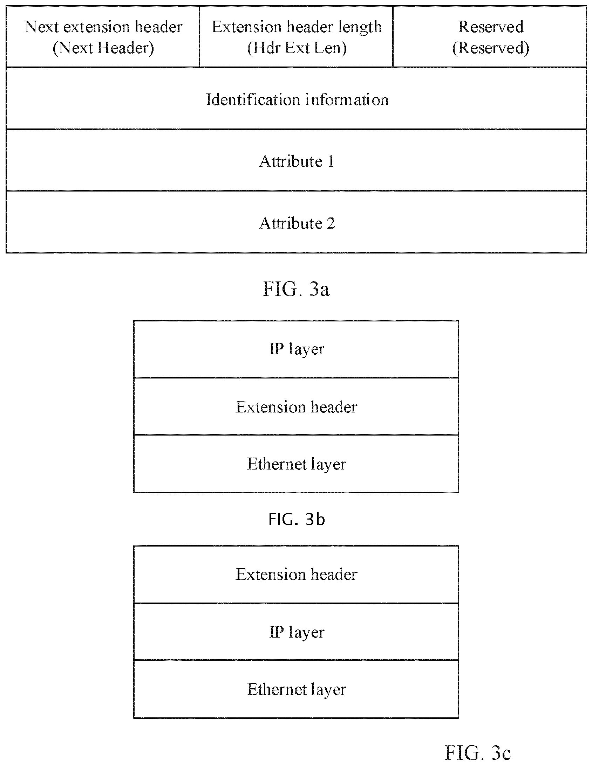

In specific implementation, the identification information and the attribute information may be carried in any location of the first packet, for example, in an extension header of the first packet. An example in which a VPN for carrying a leased line service is established between the head node 101 and a tail node 104 is used for description. A packet transmitted between the head node 101 and the tail node 104, for example, an internet protocol (internet protocol, IP) packet or an MPLS packet, may carry an extension header. As shown in FIG. 3a, the extension header may include an identification information field and an attribute field, which are respectively used to carry the identification information and the attribute information. The attribute field is optional. When the packet is the MPLS packet, the extension header may be located between an IP layer and an Ethernet layer, as shown in FIG. 3b. When the packet is an IPv4 packet or an IPv6 packet, the extension header may be located above an IP layer, as shown in FIG. 3c.

In actual application, to improve packet processing efficiency, when obtaining the identification information, the head node 101 may alternatively obtain indication information corresponding to the identification information. The indication information indicates whether a node on a transmission path has performed forwarding resource reservation. The indication information may be obtained by the head node 101 through configuration, or may be obtained by another network device such as the controller, or may be automatically determined by the head node 101. When the indication information exists, a node receiving the indication information may determine, based on the indication information, whether the forwarding resource reservation has been performed. If the indication information indicates that the resource reservation has not been performed, the node receiving the indication information performs resource reservation based on the identification information. If the indication information indicates that the forwarding resource reservation has been performed, the node receiving the indication information does not perform a resource reservation operation. The indication information may be added to the packet by the head node 101, and the head node 101 sends the packet to a first forwarding node 102, so that the first forwarding node 102 determines, based on the indication information in the packet, whether a forwarding resource reservation operation needs to be performed currently or the packet needs to be directly forwarded based on a reserved forwarding resource currently. This avoids repeated resource reservation operations and improves the packet processing efficiency. For example, the head node 101 may add the indication information to a first packet indicating each node to perform forwarding resource reservation. In this case, a value of the indication information in the first packet is, for example, 0. After the first forwarding node 102 receives the first packet, a forwarding resource obtaining operation and a forwarding resource reservation operation may be performed based on that the value of the indication information is 0. When the head node 101 starts to forward a second packet of the service flow, updated indication information may be added to the second packet. In this case, a value of the updated indication information in the second packet is, for example, 1. After the first forwarding node 102 receives the second packet, the second packet may be directly forwarded based on the reserved forwarding resource based on that the value of the indication information is 1, and a forwarding resource reservation operation does not need to be performed. The indication information may be located in the extension header. Specifically, the indication information may be located in a reserved field of the extension header shown in FIG. 3a.

After obtaining the forwarding resource corresponding to the identification information, the head node 101 may establish the correspondence between the identification information and the forwarding resource, and store the correspondence in a forwarding table of the head node. In this way, the head node 101 can quickly determine, based on the forwarding table, the forwarding resource corresponding to the service flow, and implement quick forwarding of the service flow by using the forwarding resource.

S202: The head node 101 sends the first packet to the first fonvarding node 102, where the first packet includes the identification information.

In this embodiment, after obtaining the forwarding resource corresponding to the identification information, the head node 101 completes forwarding resource reservation, and sends the first packet including the identification information to the first forwarding node 102, so that the first fonvarding node 102 reserves the fonvarding resource based on the identification information included in the first packet.

In a possible case, the head node 101 may first send the first packet, and then perform forwarding resource reservation. For example, when the first packet is a control-type packet, the first packet may be generated by the head node 101. When sending the first packet to the first fonvarding node 102, the head node 101 may send the first packet to the first forwarding node 102 without using a resented forwarding resource. In another possible case, the head node 101 may alternatively first reserve a forwarding resource, and then send the first packet by using the reserved fonvarding resource. For example, when the first packet is a 1^{st} packet of the service flow, the first packet may be initially generated by user equipment that communicates with the head node 101. After the head node 101 receives, from the user equipment, the first packet that belongs to a user service flow, the head node 101 adds identification information corresponding to a service flow that needs to be transmitted, to the first packet, to update the first packet. Then, when sending the updated first packet to the first fonvarding node 102, the head node 101 may first complete reservation of a forwarding resource, and then forward the first packet to the first fonvarding node 102 by using the reserved fonvarding resource. In this way, when receiving the user service flow, a subsequent fonvarding node that receives the first packet may obtain the identification infonnation based on the first packet, to implement corresponding fonvarding resource reservation. It may be understood that even if the first packet belongs to the service flow, the head node 101 may alternatively first send a plurality of service packets including the first packet, and then complete forwarding resource reservation.

When the head node 101 further obtains the attribute information corresponding to the identification information, before sending the first packet to the first forwarding node 102, the head node 101 may also add the attribute information to the first packet, so that the first forwarding node 102 can determine, based on the attribute information, the forwarding resource corresponding to the identification information.

S203: The first forwarding node 102 obtains the identification information from the first packet, and obtains the forwarding resource based on the identification information.

In this embodiment, after receiving the first packet sent by the head node 101, the first forwarding node 102 obtains the identification information from the first packet, to obtain the forwarding resource based on the identification information. In other words, the first forwarding node 102 performs forwarding resource reservation based on the identification information of the first packet. For specific implementation in which the first forwarding node 102 obtains the forwarding resource based on the identification information, refer to the implementation in which the head node obtains the forwarding resource in S201.

When the first packet further includes the attribute information, the first forwarding node 102 obtains the identification information and the attribute information from the first packet, and determines, based on the attribute information, the forwarding resource corresponding to the identification information. Specifically, the first forwarding node 102 may obtain, through calculation based on the attribute information, the forwarding resource corresponding to the identification information, or send the request message including the identification information and the attribute information to the controller, and the controller obtains, through calculation based on the attribute information, the forwarding resource corresponding to the identification information. Then, the first forwarding node 102 obtains, from the controller, the forwarding resource corresponding to the identification information.

After obtaining the forwarding resource based on the identification information, the first forwarding node 102 may establish the correspondence between the identification information and the forwarding resource, and store the correspondence in a forwarding table of the first forwarding node 102, so that the first forwarding node 102 implements quick forwarding of a subsequent service flow based on the forwarding table.

S204: The first forwarding node 102 sends the first packet to a second forwarding node 103, where the first packet includes the identification information.

After obtaining the forwarding resource corresponding to the identification information, the first forwarding node 102 performs forwarding resource reservation, and sends the first packet including the identification information to the second forwarding node 103, so that the second forwarding node 103 performs forwarding resource reservation based on the identification information of the first packet. It may be understood that although the head node 101, the first forwarding node 102, and the second forwarding node 103 determine, based on same identification information, a forwarding resource that needs to be reserved, a reserved forwarding resource on different nodes may be the same or may be different. Specifically, this needs to be determined based on factors such as a resource status of each node and a specific type of a forwarding resource. For example, when the forwarding resource is specifically a bandwidth, bandwidths reserved by the head node 101, the first forwarding node 102, and the second forwarding node 103 may be the same. When the forwarding resource is specifically a slot, even if quantities of required slot resources are the same, the head node 101, the first forwarding node 102, and the second forwarding node 103 further need to determine actually allocated and reserved slot numbers with reference to a local slot resource status. Alternatively, the controller specifically determines, based on a resource status of the node, and notifies the node to reserve a specified forwarding resource.

To reflect continuity of packet (for example, the first packet and the second packet mentioned above) transmission, in this embodiment of this application, both the first packet sent by the head node 101 to the first forwarding node 102 and the first packet sent by the first forwarding node 102 to the second forwarding node 103 are referred to as first packets. However, it may be understood that the first packet sent by the head node 101 to the first forwarding node 102 is different from the first packet sent by the first forwarding node 102 to the second forwarding node 103 in an actual application scenario. For example, information such as time to live (time to live, TTL) and a next-hop node may be different. To be specific, when the first forwarding node 102 forwards, to the second forwarding node 103, the first packet sent by the head node 101, the first packet may be actually an updated first packet with some necessary information modified. The first packet sent by the head node 101 and the updated first packet sent by the first forwarding node 102 may carry a same payload (payload) and identification information indicating the reserved forwarding resource. The first packet subsequently sent by the second forwarding node 103 to the tail node 104 has a similar meaning, and may also be an updated first packet in essence.

S205: The second forwarding node 103 obtains the identification information from the first packet, and obtains the forwarding resource based on the identification information.

After receiving the first packet sent by the first forwarding node 101, the second forwarding node 103 obtains the identification information from the first packet, to obtain the forwarding resource based on the identification information. In other words, the second forwarding node 103 reserves the forwarding resource based on the identification information of the first packet. For specific implementation in which the second forwarding node 103 obtains the forwarding resource based on the identification information, refer to S203. Details are not described in this embodiment again.

When the first packet further includes the attribute information, that the second forwarding node 103 obtains the forwarding resource based on the identification information is specifically that the second forwarding node 103 determines, based on the attribute information, the forwarding resource corresponding to the identification information. For specific implementation in which the second forwarding node 103 determines, based on the attribute information, the forwarding resource corresponding to the identification information, refer to S203.

After obtaining the forwarding resource based on the identification information, the second forwarding node 103 may further establish the correspondence between identification information and a forwarding resource, and store the correspondence in a forwarding table of the second forwarding node 103.

S206: The second forwarding node 103 sends the first packet to the tail node 104, where the first packet includes the identification information.

After obtaining the forwarding resource corresponding to the identification information, the second forwarding node 103 reserves the forwarding resource, and sends the first packet including the identification information to the tail node 104. For implementation in which the second forwarding node 103 sends the first packet to the tail node 104, refer to S204.

In this embodiment, the network system structure shown in FIG. 1 is used as an example. In an actual application scenario, there may be any quantity of network devices used as intermediate nodes. For an operation performed by each intermediate node, refer to descriptions about the first forwarding node 102 and the second forwarding node 103 in this embodiment. Details are not described herein again. After receiving the first packet sent by the second forwarding node 103, the tail node 104 obtains the identification information from the first packet, to obtain the forwarding resource based on the identification information. In other words, the tail node 104 reserves the forwarding resource based on the identification information of the first packet. For specific implementation in which the tail node 104 obtains the forwarding resource based on the identification information, refer to S203. Details are not described in this embodiment again.

S207: The tail node 104 receives the first packet.

After receiving the first packet sent by the second forwarding node 103, the tail node 104 performs different processing in different application scenarios. Specifically, the following operations may be included.

In one case, the tail node 104 no longer forwards the first packet after receiving the first packet. For example, when the tail node 104 is a destination node of the packet, the tail node 104 may only receive the first packet without forwarding the first packet, and does not need to perform a forwarding resource reservation operation.

In another case, for example, in a case in which the destination node is user equipment connected to the tail node 104, if the first packet is the control-type packet, after obtaining a corresponding forwarding resource based on the identification information of the first packet, the tail node 104 may no longer forward the first packet. In this case, all necessary nodes on the transmission path complete forwarding resource reservation. If the first packet is a service flow packet, after obtaining a corresponding forwarding resource based on the identification information of the first packet, the tail node 104 may pop up the identification information in the first packet, and forward the first packet that does not include the identification information to the user equipment. When the identification information is carried in the extension header of the first packet, the pop-up operation may be popping up an entire extension header. When the first packet further includes the attribute information, the tail node 104 simultaneously pops up the identification information and the attribute information, and forwards a first packet that does not include the identification information and the attribute information to the user equipment.

In still another case, for example, in a case in which the next-hop node and the tail node 104 do not belong to a same network domain, different identification information may be set for a same service flow in different network domains. To ensure that the next-hop node can identify the identification information of the first packet, after receiving the first packet sent by the second forwarding node, the tail node 104 obtains, based on identification information that can be used in a current network domain and that is carried in the first packet, corresponding identification information used in another network domain, and the corresponding identification information used in the another network domain may be referred to as updated identification information. To be specific, the identification information before updating is applied to a network domain to which the head node 101, the first forwarding node 102, the second forwarding node 103, and the tail node 104 belong, and the updated identification information is applied to a network domain to which a next-hop node belongs. The tail node 104 replaces the identification information in the first packet with the updated identification information, and sends, to the next-hop node, the first packet that carries the updated identification information, to ensure that the next-hop node can identify the updated identification information in the first packet and complete corresponding forwarding resource reservation. The network domain may be an autonomous system (autonomous system, AS) domain, an interior gateway protocol (interior gateway protocols, IGP) domain, or a management domain. For example, the management domain may include a plurality of AS domains, and the plurality of AS domains are centrally managed by the controller.

Specifically, a node in the network system may pre-store a correspondence between identification information and a same service flow in different network domains, for example, service flow 1-identification information x1 (network domain 1)-identification information y1 (network domain 2)-identification information z1 (network domain 3); service flow 2-identification information x2 (network domain 1)-identification information y2 (network domain 2)-identification information z1 (network domain 3). After the node receives a first packet sent by a previous-hop node, if the next-hop node and the node belong to different network domains, the node determines, based on the identification information of the first packet and the foregoing correspondence, corresponding identification information of a network domain in which the next-hop node is located, and after the identification information of the first packet is replaced with the corresponding identification information used in the another network domain, the first packet is forwarded to the next-hop node.

The foregoing three cases are merely used as specific examples. It may be understood that the tail node 104 may alternatively perform a specific and proper operation with reference to another actual application scenario. For example, although the next-hop node and the tail node 104 belong to different network domains, if network devices in different network domains determine same identification information in advance by using a mechanism such as negotiation, the tail node 104 may not update the identification information when forwarding the first packet across domains. For another example, when the first packet is a service flow packet, and the tail node 104 needs to forward the first packet to a next-hop node that belongs to another network domain, if a network domain in which the next-hop node is located does not have a forwarding resource reservation capability, the tail node 104 may also pop up the identification information in the first packet, and then send the updated first packet to the next-hop node.

S208: The head node 101 sends, to the first forwarding node 102 by using the reserved forwarding resource, a second packet that includes the identification information.

In this embodiment, when the head node 101 obtains the second packet belonging to the service flow, the second packet has not included the identification information yet. The head node 101 first obtains the identification information corresponding to the service flow, and determines, based on the identification information and the correspondence in the stored forwarding table, the forwarding resource corresponding to the identification information. Before forwarding the second packet to the first forwarding node 102 by using the forwarding resource, the head node 101 adds the identification information to the second packet, to update the second packet. Then, the updated second packet including the identification information is forwarded to the first forwarding node 102 by using the determined forwarding resource.

The foregoing uses an example in which the second packet is sent when resource reservation is completed. It may be understood that, if the first packet also belongs to the service flow, because reservation of a forwarding resource may take particular time, one or more service flow packets immediately following the first packet may not perform forwarding by using the reserved forwarding resource. In this case, the second packet is not necessarily a packet sent adjacent to the first packet.

For an occasion at which the second packet is sent, in specific implementation, after sending the first packet to the first forwarding node 102, the head node 101 may send the second packet to the first forwarding node 102 by using the reserved forwarding resource, or after sending the first packet to the tail node 104, send the second packet to the first forwarding node 102 by using the reserved forwarding resource. Alternatively, after a preset time period has passed since the first packet is sent, the second packet may be sent to the first forwarding node 102 by using the reserved forwarding resource.

S209: The first forwarding node 102 determines, based on the identification information of the second packet, the forwarding resource corresponding to the identification information.

For example, the forwarding resource may be determined by the first forwarding node 102 based on identification information of the second packet and the locally stored correspondence table between identification information and a forwarding resource. The correspondence table may be established after the first forwarding node 102 obtains the corresponding forwarding resource from the controller based on the identification information of the first packet, or the first forwarding node 102 stores the correspondence table between identification information and a forwarding resource before receiving the first packet, and after the first packet is received, a resource reservation operation is triggered based on the correspondence table.

S210: The first forwarding node 102 sends the second packet to the second forwarding node 103 by using the forwarding resource corresponding to the identification information.

In this embodiment, after receiving the second packet, the first forwarding node 102 determines, based on the identification information of the second packet and the correspondence in the forwarding table, the forwarding resource corresponding to the identification information. Then, the first forwarding node 102 forwards the second packet to the second forwarding node 103 by using the determined forwarding resource.

In specific implementation, after sending the first packet to the second forwarding node 103, the first forwarding node 102 may send the second packet to the second forwarding node 103 by using the reserved forwarding resource, or after sending the first packet to the tail node 104, send the second packet to the second forwarding node 103 by using the reserved forwarding resource. Alternatively, after a preset time period has passed since the first packet is sent, the second packet may be sent to the second forwarding node 103 by using the reserved forwarding resource.

S211: The second forwarding node 103 determines, based on the identification information of the second packet, the forwarding resource corresponding to the identification information.

For a specific operation performed by the second forwarding node 103, refer to S209. Details are not described herein again.

S212: The second forwarding node 103 sends the second packet to the tail node 104 by using the forwarding resource corresponding to the identification information.

In this embodiment, after receiving the second packet, the second forwarding node 103 determines, based on the identification information of the second packet and the correspondence in the forwarding table, the forwarding resource corresponding to the identification information. Then, the second forwarding node 103 forwards the second packet to the tail node 104 by using the determined forwarding resource. For specific implementation in which the second forwarding node 103 sends the second packet by using the reserved forwarding resource, refer to S210.

It may be understood that after receiving the second packet, the tail node 104 performs different processing in different application scenarios. Specifically, the following operations may be included.

In a possible case, when the tail node 104 is a destination node of the second packet, the tail node 104 no longer forwards the second packet after receiving the second packet.

In another possible case, when a next-hop node of the tail node 104 is the user equipment, after determining the corresponding forwarding resource based on the identification information of the second packet, the tail node 104 pops up the identification information of the second packet, and forwards the second packet that does not include the identification information to the user equipment. In addition, when the second packet further includes the attribute information, the tail node 104 simultaneously pops up the identification information and the attribute information, and forwards a second packet that does not include the identification information and the attribute information to the user equipment.

In still another possible case, when a next-hop node connected to the tail node 104 and the tail node 104 belong to different network domains, and when the tail node 104 forwards, to the next-hop node, the second packet sent by the second forwarding node 103, the tail node 104 obtains the identification information based on the identification information of the second packet, replaces the identification information with the updated identification information, and forwards the second packet to the next-hop node by using the reserved forwarding resource. The identification information before replacing is applied to a network domain to which the head node 101, the first forwarding node 102, the second forwarding node 103, and the tail node 104 belong, and the replaced identification information is applied to a network domain to which the next-hop node belongs.

It may be understood that the foregoing case is merely used as an example, and processing performed by the tail node 104 on the second packet may be determined with reference to a specific application scenario.

It may be understood that, in this embodiment, the operation that each node performs forwarding by using the reserved forwarding resource based on the identification information may be performed on a control plane, or may be performed on a forwarding plane.

The head node 101 is used as an example. In one case, if the head node 101 stores the correspondence table between identification information and a forwarding resource before receiving or generating the first packet, for example, the correspondence table may be preconfigured and stored, or may be sent by the controller, the head node 101 may obtain, based on the correspondence table stored on the control plane, the forwarding resource corresponding to the identification information of the service flow, and reserve the forwarding resource. When forwarding the service flow including the second packet, the head node 101 may still query the correspondence table on the control plane, and complete forwarding by using the reserved forwarding resource. In the foregoing case, the correspondence table may be stored on the forwarding plane before the first packet is received or generated. In this case, the head node 101 may complete resource reservation on the forwarding plane, and when forwarding the service flow including the second packet, query the correspondence table on the forwarding plane and complete forwarding by using the reserved resources.

In another case, if the head node 101 does not locally store the correspondence table between identification information and a forwarding resource before receiving or generating the first packet, but needs to request, by using the obtained identification information, the controller to obtain the forwarding resource corresponding to the identification information, after obtaining the forwarding resource from the controller and reserving the forwarding resource, the head node 101 may send the correspondence between the identification information and the forwarding resource to the forwarding plane, and store the correspondence in a layer-2 forwarding table. In this way, when forwarding the service flow, the node may determine the reserved forwarding resource based on the identification information of the second packet that belongs to the service flow, and then quickly forward the service flow by using the forwarding resource.

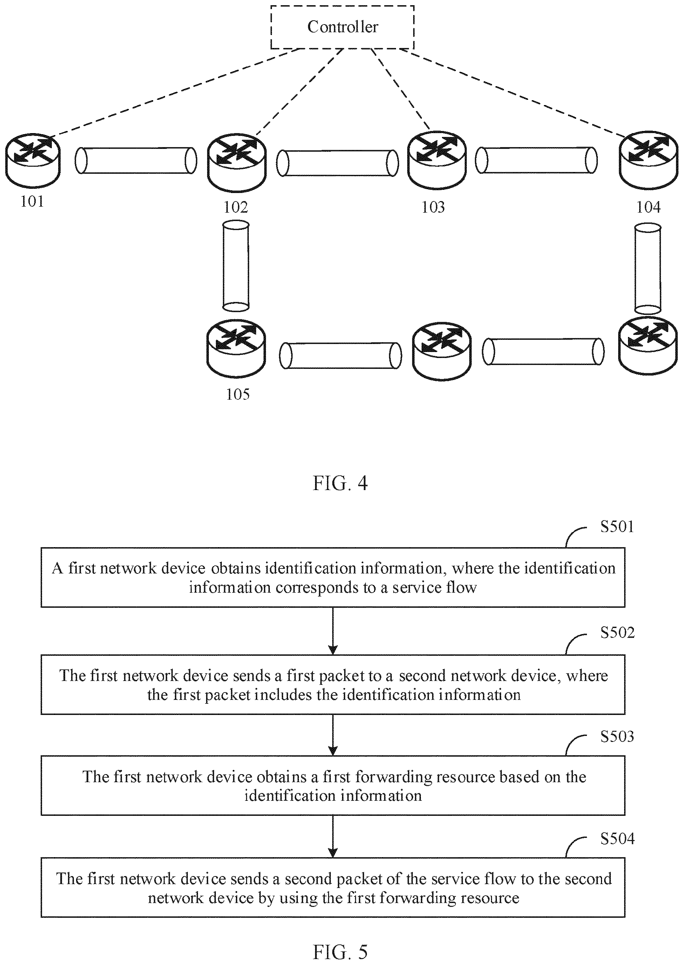

In actual application, there may be a multipath forwarding scenario. For example, when the service flow passes through a node having a load balancing capability, the service flow is sent from the node to a plurality of next-hop nodes, to implement load balancing of the service flow. As shown in FIG. 4, a service flow on a first fonvarding node 102 may flow into a second fonvarding node 103 and a third forwarding node 105, and load balancing is formed between the second fonvarding node 103 and the third forwarding node 105. An embodiment of this application provides another packet transmission method, to reserve a fonvarding resource for the service flow in a load balancing scenario.

A network system shown in FIG. 4 is used as an example. The first forwarding node 102 is a node that needs to perform load balancing. The first forwarding node 102 receives a first packet sent by a head node 101. The first fonvarding node 102 may obtain, locally or from a controller based on identification information of the first packet, the fonvarding resource that needs to be reserved.

In one case, when the forwarding resource is a resource type that can be allocated, such as a bandwidth or a slot, the obtained forwarding resource is a total fonvarding resource that needs to be reserved by the first forwarding node 102 for the service flow. According to a load balancing policy of the node, the first fonvarding node 102 may separately reserve a forwarding resource reaching each next-hop node for example, separately reserve a first forwarding resource reaching the second forwarding node 103 and a second forwarding resource reaching the third forwarding node 105. The first forwarding resource and the second forwarding resource are determined proportionally according to the load balancing policy, and a sum of the first forwarding resource and the second forwarding resource is a total forwarding resource that should be reserved and that is obtained by the first forwarding node 102. Alternatively, when the obtained total forwarding resource that needs to be reserved is greater than a sum of bandwidths that can be borne by load balancing links, forwarding resource reservation may be performed based on a maximum bandwidth that can be borne by the load balancing links. In the example shown in FIG. 4, to be specific, the first forwarding node 102 reserves the first forwarding resource based on a bandwidth of a link between the first forwarding node 102 and the second forwarding node 103, and reserves the second forwarding resource based on a bandwidth of a link between the first forwarding node 102 and the third forwarding node 105.

After receiving the service flow forwarded by the head node 101, the first forwarding node 102 divides the service flow into two parts proportionally according to the load balancing policy, and forwards the two parts of the service flow respectively based on the reserved first fonvarding resource and the reserved second forwarding resource. Assuming that a second packet belongs to a first part of the service flow, and a third packet belongs to a second part of the service flow, the first fonvarding node 102 may forward the second packet to the second fonvarding node 103 by using the reserved first forwarding resource, and forward the third packet to the third fonvarding node 105 by using the reserved second forwarding resource. Both the second packet and the third packet include same identification information.

In another case, when the fonvarding resource is a resource type such as a port, the first forwarding node 102 may obtain, according to the load balancing policy, a fonvarding resource that can support the first forwarding node 102 in forwarding a corresponding proportion of the service flow to each of the second fonvarding node 103 and the third forwarding node 105. For example, after performing calculation and evaluation, the first fonvarding node 102 determines a first port used to forward the first part of the service flow to the second fonvarding node 103, and determines a second port used to forward the second part of the service flow to the third forwarding node 105, so that a link corresponding to the first port and a link corresponding to the second port can respectively satisfy transmission requirements of the service flow after load balancing.

After receiving the service flow forwarded by the head node 101, the first fonvarding node 102 divides the service flow into two parts proportionally according to the load balancing policy, and forwards the two parts of the service flow respectively based on the reserved first forwarding resource (namely, the first port) and the reserved second forwarding resource (namely, the second port). Assuming that a second packet belongs to a first part of the service flow, and a third packet belongs to a second part of the service flow, the first forwarding node 102 may forward the second packet to the second forwarding node 103 by using the reserved first port, and forward the third packet to the third forwarding node 105 by using the reserved second port. Both the second packet and the third packet include same identification information.

After determining the first fonvarding resource and the second forwarding resource based on the identification information and a corresponding load balancing policy, the first fonvarding node 102 may establish a correspondence between the identification information and each of the first forwarding resource and the second forwarding resource, and store the correspondence in a forwarding table of the first forwarding node 102. After the first forwarding node 102 subsequently receives a packet that belongs to the service flow and that is forwarded by the head node 101, the first fonvarding node 102 may quickly obtain the first forwarding resource and the second forwarding resource based on the identification information in the packet and the correspondence in the forwarding table.

In another possible implementation, that the first forwarding node 102 determines the first fonvarding resource and the second forwarding resource based on the identification information and the corresponding load balancing policy may be alternatively implemented in the following manner: The first forwarding node 102 directly determines the first forwarding resource and the second forwarding resource based on the identification information and a preconfigured load balancing policy, there is no need to first obtain a total forwarding resource that needs to be reserved. When the first forwarding node 102 obtains fonvarding resource information by sending a request message to the controller, the controller may directly determine the first fonvarding resource and the second fonvarding resource based on the identification information in the request message and a load balancing policy that is pre-stored by the controller and that is corresponding to the first fonvarding node 102. Then, the controller sends, to the first fonvarding node 102, a response message including a first fonvarding resource and a second forwarding resource that are corresponding to the identification information. When the controller does not pre-store the load balancing policy corresponding to the first forwarding node 102, the request message sent by the first fonvarding node 102 may further include the load balancing policy.

The first packet further includes either of authentication information and resource release information. The authentication information is used to ensure security of each node. When an authentication result of the node is that authentication succeeds, the node may perform fonvarding resource reservation and forward a service flow packet by using a reserved forwarding resource. The resource release information indicates each node to release the reserved forwarding resource based on a preset resource release period, to ensure that the node can reclaim the forwarding resource in time, to apply for a fonvarding resource for another service flow that needs to be forwarded subsequently. In some embodiments, an authentication information field and a resource release information field may be defined in an extension header shown in FIG. 3a.

In specific implementation, after receiving the first packet sent by a previous-hop node, any node obtains an authentication result based on the authentication information in the first packet. When the authentication result is that authentication succeeds, the node may perform resource reservation based on the identification information of the first packet; or when the authentication result is that the authentication fails, the node does not perform a resource reservation operation, and only forwards the first packet. In some possible cases, any packet included in the service flow may alternatively include updated authentication information. After receiving the any packet, the first forwarding node obtains a new authentication result based on the updated authentication information in the packet. When the new authentication result is that authentication succeeds, for a case in which the previous authentication fails, the node may perform resource reservation based on the identification information carried in the any packet, or for a case in which the previous authentication succeeds, the node may forward the any packet to a next-hop node by using the reserved forwarding resource.

That the node obtains the authentication result based on the authentication information in the first packet may be implemented in the following manner. The node directly sends the authentication information or forwards the authentication information to an authentication server through the controller, and the authentication server performs an authentication operation and releases an authentication result. Alternatively, the node invokes a local authentication function module based on the authentication information, or sends an authentication request message to the controller, to obtain the authentication result.

When the first packet includes the resource release information, and when performing resource reservation based on the identification information of the first packet, the node determines survival duration of the reserved forwarding resource based on the resource release information. When no packet that belongs to the service flow is received within a time period indicated by the resource release information, the first forwarding node releases the reserved forwarding resource.

In the foregoing embodiment, an example in which each of the four nodes shown in FIG. 1 has a forwarding resource reservation capability is used. In an actual application scenario, there may be one or more nodes that do not support forwarding resource reservation on a transmission path from a head node to a tail node, and when receiving the first packet or the second packet, the one or more nodes may transparently transmit the first packet or the second packet without performing any operation.

For ease of understanding embodiments of this application, refer to FIG. 5. FIG. 5 is a flowchart of a packet transmission method according to an embodiment of this application. As shown in FIG. 5, the method may include the following steps.

S501: A first network device obtains identification information.

The first network device in this embodiment may be a head node, an intermediate forwarding node, or a tail node, or a network device including the head node, the intermediate forwarding node, or the tail node, for example, the head node 101, the first forwarding node 102, the second forwarding node 103, the third forwarding node 105, or the tail node 104 in FIG. 1 or FIG. 4. When the first network device is the head node 101, for specific implementation in which the first network device obtains the identification information based on local configuration information or from a controller, refer to S201. When the first network device is the intermediate forwarding node (for example, the first forwarding node 102 or the second forwarding node 103) or the tail node 104, the first network device obtains the identification information from a first packet sent by a previous-hop network device.

S502: The first network device sends the first packet to a second network device, where the first packet includes the identification information, and the identification information corresponds to a service flow.

In this embodiment, when the first network device is the head node 101, for implementation in which the first network device sends the first packet to the second network device, refer to S202. When the first network device is the intermediate forwarding node, for implementation in which the first network device sends the first packet to the second network device, refer to S204 or S206. The first packet may be a control-type packet, or may be a service-type packet, for example, a 1^{st} packet of the service flow. For a specific manner in which the first network device sends the first packet to the second network device for a first packet with a different type, refer to S202. It may be understood that when the first network device is the head node, before sending the first packet to the second network device, the first network device adds the identification information to the first packet.

S503: The first network device obtains a first forwarding resource based on the identification information of the first packet, where the first fonvarding resource is a resource required by the first network device to forward the service flow to the second network device.

When the first network device is the head node 101, after obtaining the identification information through the controller, the local configuration information, or the like, the first network device may obtain the first forwarding resource based on the identification information. When the first network device is another node such as an intermediate node or the tail node, the first network device obtains the first forwarding resource based on the identification information of the first packet.

That the first network device obtains the first fonvarding resource based on the identification information may be implemented in the following manners. In one manner, the first network device obtains the first fonvarding resource based on a stored correspondence table and the identification information, where the correspondence table includes a correspondence between identification information and a first forwarding resource. In another manner, the first network device sends a request message to the controller, where the request message includes the identification information. The first network device receives a response message sent by the controller, where the response message includes a first forwarding resource corresponding to the identification information. For specific implementation of the foregoing two manners, refer to S201. Details are not described in this embodiment again.

When the first packet further includes attribute information, where the attribute information includes a constraint condition used by a user to obtain the first forwarding resource, that the first network device obtains the first forwarding resource based on the identification information may include: The first network device determines, based on the attribute information, the first forwarding resource corresponding to the identification information. For specific implementation, refer to S201.

After obtaining the first forwarding resource based on the identification information of the first packet, the first network device may alternatively establish the correspondence between identification information and a first forwarding resource, and store the correspondence in a forwarding table of the first network device. In this way, a packet of a subsequent service flow can be quickly forwarded by using the reserved forwarding resource recorded in the forwarding table. The forwarding table may be a forwarding table that is delivered by the first network device to a forwarding plane for storage after the first network device obtains, from a control plane, the forwarding resource corresponding to the identification information.

A sequence of performing S502 and S503 is not limited in this embodiment. The first network device may alternatively first perform S503, and then perform S502, or the first network device simultaneously performs S502 and S503.

S504: The first network device sends a second packet to the second network device by using the first forwarding resource, where the second packet belongs to the service flow, and the second packet includes the identification information.

In this embodiment, when the first network device is the head node, after receiving the second packet sent by a user terminal, the first network device adds, to the second packet based on the service flow to which the second packet belongs, identification information corresponding to the service flow, and sends the second packet to the second network device by using the reserved first forwarding resource. For details, refer to S208. When the first network device is the another intermediate fonvarding node, the first network device may determine the first forwarding resource based on the identification information of the second packet and forward the second packet to the second network device by using the first fonvarding resource. Specifically, refer to S209 to S211. For example, the second packet may be the 1^{st} packet of the service flow, or may be a packet at another sorting location of the service flow.

When the first network device stores the correspondence between the first forwarding resource and the identification information by using the forwarding table, the first network device may determine, based on the identification information of the second packet and the correspondence, the first forwarding resource corresponding to the identification information, to implement quick forwarding of the second packet. The first network device sends the second packet to the second network device by using the first forwarding resource.

In actual application, there may be a scenario in which the first network device corresponds to a plurality of next-hop network devices. When the service flow passes through the first network device, the service flow is sent from the first network device to the plurality of next-hop network devices, to implement load balancing of the service flow. When reserving the forwarding resource based on the identification information, the first network device may reserve, based on the identification information and a preconfigured load balancing policy, a forwarding resource reaching each next-hop network device. When forwarding a packet that belongs to the service flow to the plurality of next-hop network devices, the first network device may divide the service flow into several parts, to send different parts to different next-hop network devices.

For ease of understanding, an example in which the first network device corresponds to two next-hop network devices, which are respectively the second network device and a third network device, is used for description, and load balancing is formed between the second network device and the third network device. For example, the first network device reserves the first forwarding resource reaching the second network device, and reserves a second forwarding resource reaching the third network device. The first forwarding resource and the second forwarding resource are determined, by the first network device, based on the identification information and the load balancing policy of the first network device. For a specific determining manner, refer to the foregoing related descriptions. Details are not described herein again.

After determining the first fonvarding resource and the second fonvarding resource based on the identification information and the load balancing policy, the first network device establishes a correspondence between the identification information and each of the first forwarding resource and the second fonvarding resource, and stores the correspondence in a forwarding table of the first network device. When forwarding a packet that belongs to the service flow, the first network device may determine, based on the identification information and the correspondence, the first forwarding resource and the second resource that are corresponding to the identification information, to forward the second packet to the second network device by using the first fonvarding resource and forward a third packet to the third network device by using a third fonvarding resource.

The first packet further includes either of authentication information and resource release information. When the first packet includes the authentication information, the first network device obtains an authentication result based on the authentication information after receiving the first packet from a fourth network device. When the authentication result is that authentication succeeds, the first network device obtains the first forwarding resource based on the identification information, where the fourth network device is a previous-hop device of the first network device. To be specific, before reserving the first forwarding resource, the first network device first performs authentication, and when the authentication result is that the authentication succeeds, performs forwarding resource reservation, to ensure security of the first network device. When the authentication result is that the authentication fails, the first network device does not perform a resource reservation operation, and only forwards the first packet.

When the first packet includes the resource release information, and when reserving the first forwarding resource based on the identification information, the first network device determines survival duration of the reserved first forwarding resource based on the resource release information. When no packet that belongs to the service flow is received within a time period indicated by the resource release information, the first network device releases the reserved forwarding resource.

When the first network device is the tail node, for specific implementation after the first packet and the second packet are received, refer to related descriptions in S207 and S212. Details are not described herein again. When the first network device used as the tail node and the second network device belong to different network domains, the first network device receives the first packet sent by the fourth network device, where the first packet includes identification information before updating, and the identification information before updating is applied to a network domain to which the first network device and the fourth network device belong. The first network device obtains the identification information based on the identification information before updating, where the identification information is applied to a network domain to which the second network device belongs. Before sending the first packet to the second network device, the first network device replaces the identification information before updating in the first packet with the identification information, and then sends the first packet. Similarly, when receiving a second packet sent by the fourth network device, the first network device obtains the identification information based on the identification information before updating in the second packet, replaces the identification information before updating in the second packet with the identification information, and sends the second packet including the identification information to the second network device.

Based on the foregoing method embodiments, an embodiment of this application provides a packet transmission apparatus, which is described below with reference to the accompanying drawings.

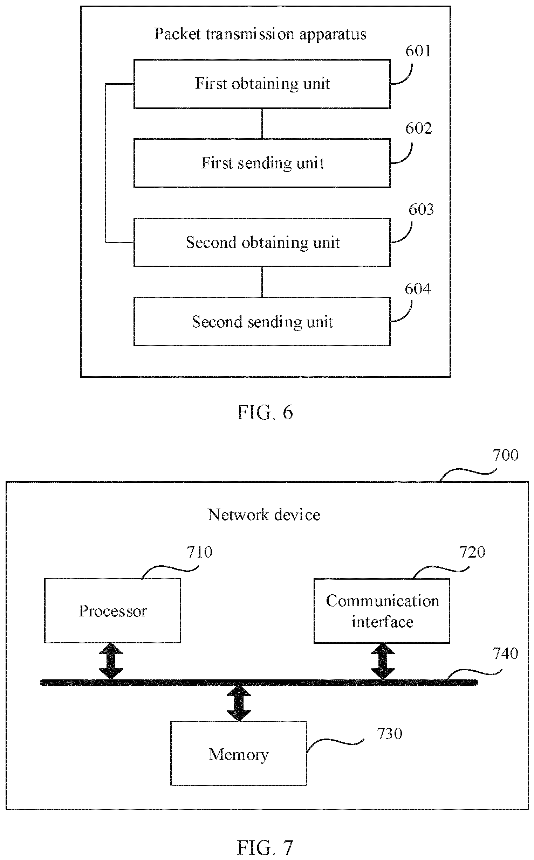

FIG. 6 is a schematic diagram of a structure of a packet transmission apparatus according to an embodiment of this application. The apparatus 600 can be used in a first network device, to perform a function of the first network device in the embodiment shown in FIG. 5, and may include a first obtaining unit 601, a first sending unit 602, a second obtaining unit 603, and a second sending unit 604.

The first obtaining unit 601 is configured to obtain identification information.

When the first network device in which the apparatus 600 is used is a head node 101, for specific implementation in which the first obtaining unit 601 obtains the identification information, refer to S201 or S208 in the embodiment shown in FIG. 2A and FIG. 2B. When the first network device in which the apparatus 600 is used is a first forwarding node 102, a second forwarding node 103, or a tail node 104, the first obtaining unit 601 may obtain the identification information from a first packet or a second packet. For details, refer to S203, S205, S209, or S211.

The first sending unit 602 is configured to send the first packet to a second network device, where the first packet includes the identification information, and the identification information corresponds to a service flow.

For implementation in which the first sending unit 602 sends the first packet to the second network device, refer to S202, S204, or S206.

The second obtaining unit 603 is configured to obtain a first forwarding resource based on the identification information of the first packet, where the first forwarding resource is a resource required by the first network device to forward the service flow to the second network device.

For implementation in which the second obtaining unit 603 obtains the first forwarding resource based on the identification information of the first packet, refer to S201, S203, or S205.

The second sending unit 604 is configured to send the second packet to the second network device by using the first forwarding resource, where the second packet belongs to the service flow, and the second packet includes the identification information.

It may be understood that before sending the second packet by using the second sending unit 604, the first network device may determine the first forwarding resource based on the identification information, and then send the second packet to the second network device by using the first forwarding resource. When the network device is the head node 101, for implementation of determining the first forwarding resource based on the identification information and sending the second packet to the second network device by using the first forwarding resource, refer to S208. When the first network device is the first forwarding node 102, the second forwarding node 103, or the tail node 104, for implementation of determining, based on the identification information of the second packet, a first forwarding resource corresponding to the identification information, refer to S209 or S211. For implementation of sending the second packet to the second network device by using the first forwarding resource, refer to S210 or S212.

In a possible implementation, the identification information is obtained by the first obtaining unit based on local configuration information, or is obtained by the first obtaining unit from a controller, or is obtained from the first packet sent by a previous-hop network device of the first network device.

When the network device is the head node 101, for specific implementation in which the first obtaining unit obtains the identification information based on the local configuration information or from the controller, refer to S201. When the network device is the first forwarding node 102, the second forwarding node 103, or the tail node 104, for specific implementation in which the first obtaining unit obtains the identification information from the first packet sent by the previous-hop network device, refer to S203 or S205.

In a possible implementation, the apparatus further includes:
an adding unit, configured to: before the function of the second sending unit is performed, add the identification information to the second packet based on that the second packet belongs to the service flow.

For implementation in which the adding unit adds the identification information to the second packet, refer to S208.

In a possible implementation, the apparatus further includes:
a storage unit, configured to: after the second obtaining unit obtains the first forwarding resource based on the identification information of the first packet, establish a correspondence between the identification information and the first forwarding resource, and store the correspondence in a forwarding table of the first network device.

For implementation in which the storage unit stores the correspondence between identification information and a first forwarding resource in the forwarding table of the first network device, refer to S201, S203, or S205.

In a possible implementation, the second sending unit includes:
a first determining subunit, configured to determine, based on the identification information of the second packet and the correspondence, the first forwarding resource corresponding to the identification information; and
a sending subunit, configured to send the second packet to the second network device by using the first forwarding resource.

When the first network device is the head node 101, for implementation in which the first determining subunit determines the first forwarding resource based on the identification information and the sending subunit sends the second packet to the second network device by using the first forwarding resource, refer to S208. When the first network device is the first forwarding node 102, the second forwarding node 103, or the tail node 104, for implementation in which the first determining subunit determines, based on the identification information of the second packet, the first forwarding resource corresponding to the identification information, refer to S209 or S211. For implementation in which the sending subunit sends the second packet to the second network device by using the first forwarding resource, refer to S210 or S212.

In a possible implementation, the second obtaining unit includes:
a first obtaining subunit, configured to obtain the first forwarding resource based on a stored correspondence table and the identification information, where the correspondence table includes a correspondence between the identification information and the first forwarding resource; or
a first sending subunit, configured to send a request message to the controller, where the request message includes the identification information; and
a first receiving subunit, configured to receive a response message sent by the controller, where the response message includes the first forwarding resource corresponding to the identification information.

For implementation in which the first obtaining subunit obtains the first forwarding resource based on the stored correspondence table and identification information, implementation in which the first sending subunit sends the request message to the controller, and implementation in which the first receiving subunit receives the response message sent by the controller, refer to S201, S203, or S205.

In a possible implementation, the first packet further includes attribute information, where the attribute information includes a constraint condition used to obtain the first forwarding resource, and the second obtaining unit is specifically configured to determine, based on the attribute information, the first forwarding resource corresponding to the identification information.

When the first packet further includes the attribute information, for implementation in which the second obtaining unit determines, based on the attribute information, the first forwarding resource corresponding to the identification information, refer to S201, S203, or S205.

In a possible implementation, a next hop of the first network device includes the second network device and a third network device, load balancing is formed between the second network device and the third network device, the second packet belongs to a first part of the service flow, and the apparatus further includes:
a third obtaining unit, configured to obtain a second forwarding resource based on the identification information, where the second forwarding resource is a resource required by the first network device to forward a second part of the service flow to the third network device; and
a third sending unit, configured to send a third packet to the third network device by using the second forwarding resource, where the third packet includes the identification information, and the third packet belongs to the second part of the service flow.

When the network device is corresponding to a plurality of next-hop network devices, for implementation in which the third obtaining unit obtains the second forwarding resource based on the identification information and implementation in which the third sending unit sends the third packet to the third network device by using the second forwarding resource, refer to the implementation process of the first forwarding node 102 in the embodiment shown in FIG. 4.

In a possible implementation, the first forwarding resource and the second forwarding resource are determined based on the identification information and a load balancing policy of the first network device.

For a process of determining the first forwarding resource and the second forwarding resource, refer to implementation of the first forwarding node 102 in the embodiment shown in FIG. 4.

In a possible implementation, the apparatus further includes:
a storage unit, configured to: after the first forwarding resource and the second forwarding resource are obtained based on the identification information, establish a correspondence between the identification information and each of the first forwarding resource and the second forwarding resource, and store the correspondence in a forwarding table of the first network device.

For an implementation in which the storage unit stores the correspondence between the identification information and each of the first forwarding resource and the second forwarding resource in the forwarding table of the first network device, refer to implementation of the first forwarding node 102 in the embodiment shown in FIG. 4.

In a possible implementation, the first packet further includes either of authentication information and resource release information.

In a possible implementation, the apparatus further includes:
a receiving unit, configured to: before the first packet is sent to the second network device, receive the first packet from a fourth network device, where the first packet further includes the authentication information; and the fourth network device is a previous-hop device of the first network device; and
a fourth obtaining unit, configured to obtain an authentication result based on the authentication information, where when the authentication result is that authentication succeeds, the second sending unit sends the second packet to the second network device.

In a possible implementation, the apparatus further includes:
a receiving unit, configured to, before the first packet is sent to the second network device, receive the first packet from a fourth network device, where the first packet further includes the resource release information; and the fourth network device is a previous-hop device of the first network device; and
a release unit, configured to: when no packet that belongs to the service flow is received within a time period indicated by the resource release information, release, by the first network device, the first forwarding resource.

When the first packet includes the authentication information and/or the resource release information, for implementation of the receiving unit, the fourth obtaining unit, and the release unit, refer to related descriptions in the foregoing method embodiments. Details are not described herein again.

In a possible implementation, when the first network device and the second network device belong to different network domains, the apparatus further includes:
a receiving unit, configured to: before the first packet is sent to the second network device, receive the first packet from a fourth network device, where the first packet includes identification information before updating, and the identification information before updating is applied to a network domain to which the first network device and the fourth network device belong;
a fifth obtaining unit, configured to obtain the identification information based on the identification information before updating, where the identification information is applied to a network domain to which the second network device belongs; and
a replacement unit, configured to replace the identification information before updating in the first packet with the identification information.

When the first network device and the second network device belong to different network domains, for implementation of the receiving unit, the fifth obtaining unit, and the replacement unit, refer to related descriptions of the foregoing method embodiments. Details are not described herein again.

In a possible implementation, the first packet also belongs to the service flow.

For related implementation in which the first packet is a service flow packet, refer to S202.

For specific executable functions and implementation of the packet transmission apparatus 600, refer to the corresponding descriptions about the first network device in the embodiment shown in FIG. 2A and FIG. 2B or FIG. 5. Details are not described herein again.

FIG. 7 is a schematic diagram of a structure of a network device according to an embodiment of this application. For example, the network device may be the first network device or the second network device in the embodiment shown in FIG. 2A and FIG. 2B or FIG. 5, or may be a device implementation of the packet transmission apparatus 600 in the embodiment shown in FIG. 6.

Refer to FIG. 7. A network device 700 includes a processor 710, a communication interface 720, and a memory 730. There may be one or more processors 710 in a packet forwarding device 700. In FIG. 7, one processor is used as an example. In this embodiment of this application, the processor 710, the communication interface 720, and the memory 730 may be connected by using a bus system or in another manner. In FIG. 7, for example, they are connected by using a bus system 740.

The processor 710 may be a CPU, an NP, or a combination of a CPU an NP. The processor 710 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

When the network device includes a head node 101, the processor 710 may perform related functions in the foregoing method embodiments, for example, obtaining identification information, obtaining a first forwarding resource based on the identification information, forwarding a second packet based on the first forwarding resource, obtaining an authentication result based on authentication information, and releasing a reserved first forwarding resource based on resource release information. When the network device is a first forwarding node 102, a second forwarding node 103, or a tail node 104, the processor 710 may perform related functions in the foregoing method embodiments, for example, obtaining a first forwarding resource based on the identification information of a first packet, forwarding a second packet based on the first forwarding resource, obtaining an authentication result based on authentication information, and releasing a reserved first forwarding resource based on resource release information.

The communication interface 720 is configured to receive and send a packet. Specifically, the communication interface 720 may include a receiving interface and a sending interface. The receiving interface may be configured to receive a packet, and the sending interface may be configured to send a packet. There may be one or more communication interfaces 720.

The memory 730 may include a volatile memory (English: volatile memory), for example, a random access memory (random access memory, RAM). Alternatively, the memory 730 may include a non-volatile memory (English: non-volatile memory), for example, a flash memory (English: flash memory), a hard disk drive (hard disk drive, HDD), or a solid-state drive (solid-state drive, SSD). The memory 730 may further include a combination of the foregoing types of memories. For example, the memory 730 may store the foregoing correspondence between identification information and a forwarding resource.

Optionally, the memory 730 stores an operating system and a program, an executable module or a data structure, or a subset thereof, or an extended set thereof. The program may include various operation instructions to implement various operations. The operating system may include various system programs to implement various basic services and process hardware-based tasks. The processor 710 may read the program in the memory 730, to implement the packet transmission method provided in embodiments of this application.

The memory 730 may be a storage device in the network device 700, or may be a storage apparatus independent of the network device 700.

The bus system 740 may be a peripheral component interconnect (peripheral component interconnect, PCI) bus, an extended industry standard architecture (extended industry standard architecture, EISA) bus, or the like. The bus system 740 may be classified into an address bus, a data bus, a control bus, and the like. For ease of representation, only one bold line is used for representation in FIG. 7, but this does not mean that there is only one bus or only one type of bus.

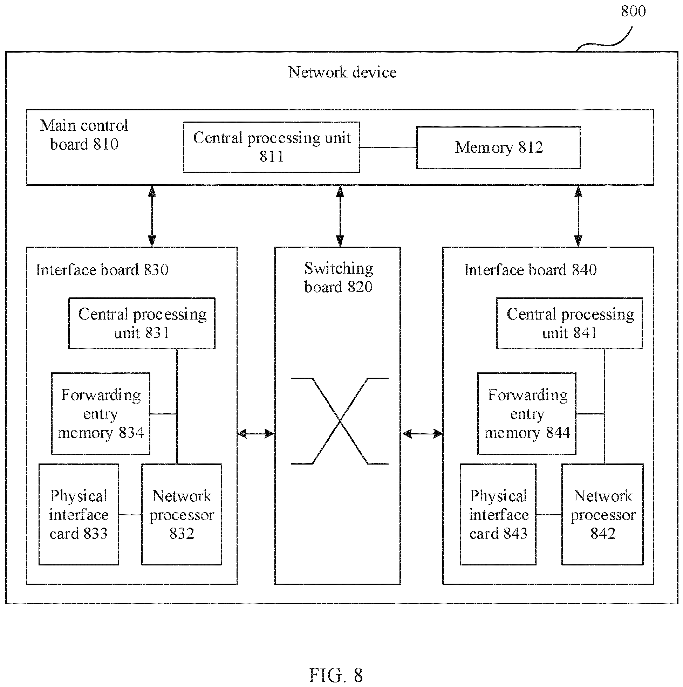

FIG. 8 is a schematic diagram of a structure of another network device 800 according to an embodiment of this application. The network device 800 may be configured as the first network device or the second network device in the foregoing embodiments, or a device implementation of the packet transmission apparatus 600 in the embodiment shown in FIG. 6.

The network device 800 includes a main control board 810 and an interface board 830.

The main control board 810 is also referred to as a main processing unit (main processing unit, MPU) or a route process card (route processor card). The main control board 810 controls and manages components in the network device 800, including routing calculation, device management, device maintenance, and protocol processing. The main control board 810 includes a central processing unit 811 and a memory 812.

The interface board 830 is also referred to as a line processing unit (line processing unit, LPU), a line card (line card), or a service board. The interface board 830 is configured to: provide various service interfaces, and forward a data packet. The service interfaces include but not limited to an Ethernet interface, a POS (Packet over SONET/SDH) interface, and the like. The Ethernet interface is, for example, a flexible Ethernet service interface (Flexible Ethernet Clients, FlexE Clients). The interface board 830 includes a central processing unit 831, a network processor 832, a fonvarding entry memory 834, and a physical interface card (physical interface card, PIC) 833.

The central processing unit 831 on the interface board 830 is configured to: control and manage the interface board 830, and communicate with the central processing unit 811 on the main control board 810.

The network processor 832 is configured to forward a packet. A form of the network processor 832 may be a forwarding chip. Specifically, processing on an uplink packet includes processing at a packet ingress interface and forwarding table searching, and processing on a downlink packet includes fonvarding table searching and the like.

The physical interface card 833 is configured to implement a physical layer interconnection function. Original traffic enters the interface board 830 from the physical interface card 833, and a processed packet is sent out from the physical interface card 833. The physical interface card 833 includes at least one physical interface. The physical interface is also referred to as a physical port. The physical interface card 833 corresponds to a FlexE physical interface 204 in a system architecture 200. The physical interface card 833, also referred to as a subcard, may be mounted on the interface board 830, and is responsible for converting an optical/electrical signal into a packet, performing validity check on the packet, and forwarding the packet to the network processor 832 for processing. In some embodiments, the central processing unit 831 on the interface board 803 may also perform a function of the network processor 832, for example, implementing software forwarding based on a general-purpose CPU, so that the network processor 832 is not required in the physical interface card 833.

Optionally, the network device 800 includes a plurality of interface boards. For example, the network device 800 further includes an interface board 840, and the interface board 840 includes a central processing unit 841, a network processor 842, a forwarding entry memory 844, and a physical interface card 843.

Optionally, the network device 800 further includes a switching board 820. The switching board 820 may also be referred to as a switch fabric unit (switch fabric unit, SFU). When the network device has a plurality of interface boards 830, the switching board 820 is configured to complete data exchange between the interface boards. For example, the interface board 830 and the interface board 840 may communicate with each other via the switching board 820.

The main control board 810 is coupled to the interface board 830. For example: the main control board 810, the interface board 830, the interface board 840, and the switching board 820 are connected to a system backplane by using a system bus to implement interworking. In a possible implementation, an inter-process communication (inter-process communication, IPC) channel is established between the main control board 810 and the interface board 830, and the main control board 810 communicates with the interface board 830 through the IPC channel.

Logically, the network device 800 includes a control plane and a forwarding plane. The control plane includes the main control board 810 and the central processing unit 831. The forwarding plane includes components that perform forwarding, such as the forwarding entry memory 834, the physical interface card 833, and the network processor 832. The control plane performs functions such as routing, generating a forwarding table, processing signaling and a protocol packet, and configuring and maintaining a device status. The control plane delivers the generated forwarding table to the forwarding plane. At the forwarding plane, by performing table lookup based on the forwarding table delivered by the control plane, the network processor 832 forwards a packet received by the physical interface card 833. The forwarding table delivered by the control plane may be stored in the forwarding entry memory 834. In some embodiments, the control plane and the forwarding plane may be completely separated, and are not on a same device.

If the network device 800 is configured as a first network device, the central processing unit 811 may obtain identification information, and obtain a forwarding resource based on the identification information. The network processor 832 may trigger the physical interface card 833 to send a service flow including a second packet to a second network device based on the determined forwarding resource.

If the network device 800 is configured as a second network device, the central processing unit 811 may obtain the forwarding resource based on the identification information in the packet. The network processor 832 may trigger the physical interface card 833 to send a service flow including a second packet to a next-hop network device based on the determined forwarding resource.

It should be understood that the first sending unit 602, the second sending unit 604, the third sending unit, the receiving unit, and the like in the packet transmission apparatus 600 may be equivalent to the physical interface card 833 or the physical interface card 843 in the network device 800. The first obtaining unit 601, the second obtaining unit 603, and the like in the packet transmission apparatus 600 may be equivalent to the central processing unit 811 or the central processing unit 831 in the network device 800.

It should be understood that an operation on the interface board 840 is consistent with an operation on the interface board 830 in this embodiment of this application. For brevity, details are not described again. It should be understood that the network device 800 in this embodiment may correspond to the first network device or the second network device in the foregoing method embodiments. The main control board 810, and the interface board 830 and/or the interface board 840 in the network device 800 may implement the functions and/or the steps implemented by the first network device or the second network device in the foregoing method embodiments. For brevity, details are not described herein again.

It should be understood that, there may be one or more main control boards. When there are a plurality of main control boards, the main control boards may include an active main control board and a standby main control board. There may be one or more interface boards; and a network device having a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need the switching board, and the interface board provides a function of processing service data in an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network device in the distributed architecture is better than that of the device in the centralized architecture. Optionally, the network device may alternatively be in a form in which there is only one card. To be specific, there is no switching board, and functions of the interface board and the main control board are integrated on the card. In this case, the central processing unit on the interface board and the central processing unit on the main control board may be combined to form one central processing unit on the card, to perform functions obtained by combining the two central processing units. This form of device (for example, a network device such as a low-end switch or a router) has a weak data exchange and processing capability. Which architecture is specifically used depends on a specific networking deployment scenario.

In some possible embodiments, the first network device or the second network device may be implemented as a virtualized device. For example, the virtualized device may be a virtual machine (English: Virtual Machine, VM) on which a program having a packet sending function is run, and the virtual machine is deployed on a hardware device (for example, a physical server). The virtual machine is a complete software-simulated computer system that has complete hardware system functions and that runs in an entirely isolated environment. The virtual machine may be configured as the first network device or the second network device. For example, the first network device or the second network device may be implemented based on a general-purpose physical server in combination with a network functions virtualization (Network Functions Virtualization, NFV) technology. The first network device or the second network device is a virtual host, a virtual router, or a virtual switch. After reading this application, with reference to the NFV technology, a person skilled in the art may virtualize, on the general-purpose physical server, the first network device or the second network device having the foregoing functions. Details are not described herein.

It should be understood that the network devices in the foregoing product forms separately have any function of the first network device or the second network device in the foregoing method embodiments, and details are not described herein.

An embodiment of this application further provides a chip, including a processor and an interface circuit. The interface circuit is configured to receive instructions and transmit the instructions to the processor. The processor may be, for example, a specific implementation form of the packet transmission apparatus 600 shown in FIG. 6, and may be configured to perform the foregoing packet transmission method. The processor is coupled to a memory, the memory is configured to store a program or instructions, and when the program or the instructions are executed by the processor, the chip system is enabled to implement the method in any one of the foregoing method embodiments.

Optionally, there may be one or more processors in the chip system. The processor may be implemented by hardware or software. When being implemented by the hardware, the processor may be a logic circuit, an integrated circuit, or the like. When being implemented by the software, the processor may be a general-purpose processor, and is implemented by reading software code stored in the memory.

Optionally, there may also be one or more memories in the chip system. The memory may be integrated with the processor, or may be separated from the processor. This is not limited in this application. For example, the memory may be a non-transitory processor, for example, a read-only memory ROM. The memory and the processor may be integrated on a same chip, or may be respectively disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processor unit, CPU), a network processor (network processor, NP), a digital signal processor (digital signal processor, DSP), a micro controller unit (micro controller unit, MCU), a programmable logic device (programmable logic device, PLD) or another integrated chip.

An embodiment of this application further provides a computer-readable storage medium, including instructions or a computer program. When the instructions or the computer program is run on a computer, the computer is enabled to perform the packet transmission method according to the foregoing embodiments.

An embodiment of this application further provides a computer program product including instructions or a computer program. When the computer program product is run on a computer, the computer is enabled to perform the packet transmission method according to the foregoing embodiments.

It should be noted that the embodiments in this specification are described in a progressive manner, each embodiment focuses on a difference from other embodiments, and for same or similar parts in the embodiments, refer to these embodiments. The system or apparatus disclosed in the embodiments corresponds to the method disclosed in the embodiments, and therefore is briefly described. For related parts, refer to the descriptions of the method.

It should be understood that in this application, "at least one (item)" means one or more and "a plurality of' means two or more. A term "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

It should be noted that in this specification, relational terms such as first and second are only used to distinguish one entity or operation from another, and do not necessarily require or imply that any actual relationship or sequence exists between these entities or operations. Moreover, the terms "include", "contain", or any other variant is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a..." does not, without more constraints, preclude the presence of additional identical elements in the process, method, article, or device that includes the element.

In combination with embodiments disclosed in this specification, method or algorithm steps may be implemented by hardware, a software module executed by a processor, or a combination thereof. The software module may be configured in a random access memory (RAM), a memory, a read-only memory (ROM), an electrically programmable ROM, an electrically erasable programmable ROM, a register, a hard disk drive, a removable disk, a CD-ROM, or a storage medium in any other forms well-known in the art.

Embodiments disclosed above are described to enable a person skilled in the art to implement or use this application. Various modifications made to embodiments will be clear to a person skilled in the art, and the general principles defined herein may also be implemented in other embodiments without departing from the spirit or scope of this application. Therefore, this application is not intended to be limited to these embodiments illustrated herein, but shall be construed in the widest scope consistent with the principles and novel features disclosed herein.

## Claims

1. A packet transmission method, wherein the method comprises:
obtaining, by a first network device, identification information;
sending, by the first network device, a first packet to a second network device, wherein the first packet comprises the identification information, and the identification information corresponds to a service flow;
obtaining, by the first network device, a first forwarding resource based on the identification information of the first packet, wherein the first forwarding resource is a resource required by the first network device to forward the service flow to the second network device; and
sending, by the first network device, a second packet to the second network device by using the first forwarding resource, wherein the second packet belongs to the service flow, and the second packet comprises the identification information.

2. The method according to claim 1, wherein the identification information is obtained by the first network device based on local configuration information, or is obtained by the first network device from a controller, or is obtained from the first packet sent by a previous-hop network device of the first network device.

3. The method according to claim 1, wherein before the sending, by the first network device, a second packet to the second network device by using the first forwarding resource, the method comprises:
adding, by the first network device, the identification information to the second packet based on that the second packet belongs to the service flow.

4. The method according to any one of claims 1 to 3, wherein after the obtaining, by the first network device, a first forwarding resource based on the identification information of the first packet, the method further comprises:
establishing, by the first network device, a correspondence between the identification information and the first forwarding resource, and storing the correspondence in a forwarding table of the first network device.

5. The method according to claim 4, wherein the forwarding, by the first network device, a second packet to the second network device by using the first forwarding resource comprises:
determining, by the first network device based on the identification information in the second packet and the correspondence, the first fonvarding resource corresponding to the identification information; and
sending, by the first network device, the second packet to the second network device by using the first fonvarding resource.

6. The method according to any one of claims 1 to 3, wherein the obtaining, by the first network device, a first forwarding resource based on the identification information of the first packet comprises:
obtaining, by the first network device, the first forwarding resource based on a stored correspondence table and the identification information, wherein the correspondence table comprises a correspondence between the identification information and the first forwarding resource; or
sending, by the first network device, a request message to the controller, wherein the request message comprises the identification information; and
receiving, by the first network device, a response message sent by the controller, wherein the response message comprises the first forwarding resource corresponding to the identification information.

7. The method according to any one of claims 1 to 6, wherein the first packet further comprises attribute information, wherein the attribute information comprises a constraint condition used to obtain the first forwarding resource, and the obtaining, by the first network device, a first forwarding resource based on the identification information of the first packet comprises:
determining, by the first network device based on the attribute information, the first forwarding resource corresponding to the identification information.

8. The method according to claim 1, wherein a next hop of the first network device comprises the second network device and a third network device, load balancing is formed between the second network device and the third network device, the second packet belongs to a first part of the service flow, and the method further comprises:
obtaining, by the first network device, a second forwarding resource based on the identification information, wherein the second forwarding resource is a resource required by the first network device to forward a second part of the service flow to the third network device; and
sending, by the first network device, a third packet to the third network device by using the second forwarding resource, wherein the third packet comprises the identification information, and the third packet belongs to the second part of the service flow.

9. The method according to claim 8, wherein the first forwarding resource and the second forwarding resource are determined based on the identification information and a load balancing policy of the first network device.

10. The method according to claim 8 or 9, wherein after the obtaining, by the first network device, a first forwarding resource and second forwarding resource based on the identification information, the method further comprises:
establishing, by the first network device, a correspondence between the identification information and each of the first forwarding resource and the second forwarding resource, and storing the correspondence in a forwarding table of the first network device.

11. The method according to claim 1, wherein the first packet further comprises either of authentication information and resource release information.

12. The method according to claim 11, wherein the method further comprises:
before the sending, by the first network device, a first packet to a second network device, receiving, by the first network device, the first packet from a fourth network device, wherein the first packet further comprises the authentication information; and
obtaining, by the first network device, an authentication result based on the authentication information, and when the authentication result is that authentication succeeds, obtaining, by the first network device, the first forwarding resource based on the identification information of the first packet.

13. The method according to claim 11, wherein the method further comprises:
before the sending, by the first network device, a first packet to a second network device, receiving, by the first network device, the first packet from a fourth network device, wherein the first packet further comprises the resource release information; and
when no packet that belongs to the service flow is received within a time period indicated by the resource release information, releasing, by the first network device, the first forwarding resource.

14. The method according to claim 1, wherein when the first network device and the second network device belong to different network domains, before the sending, by the first network device, a first packet to a second network device, the method further comprises:
receiving, by the first network device, the first packet from a fourth network device, wherein the first packet comprises identification information before updating, and the identification information before updating is applied to a network domain to which the first network device and the fourth network device belong;
obtaining, by the first network device, the identification information based on the identification information before updating, wherein the identification information is applied to a network domain to which the second network device belongs; and
replacing, by the first network device, the identification information before updating in the first packet with the identification information.

15. The method according to any one of claims 1 to 14, wherein the first packet also belongs to the service flow.

16. A packet transmission apparatus, wherein the apparatus is used in a first network device, comprising:
a first obtaining unit, configured to obtain identification information;
a first sending unit, configured to send a first packet to a second network device, wherein the first packet comprises the identification information, and the identification information corresponds to a service flow;
a second obtaining unit, configured to obtain a first forwarding resource based on the identification information of the first packet, wherein the first forwarding resource is a resource required by the first network device to forward the service flow to the second network device; and
a second sending unit, configured to send a second packet to the second network device by using the first forwarding resource, wherein the second packet belongs to the service flow, and the second packet comprises the identification information.

17. The apparatus according to claim 16, wherein the identification information is obtained by the first obtaining unit based on local configuration information, or is obtained by the first obtaining unit from a controller, or is obtained from the first packet sent by a previous-hop network device of the first network device.

18. The apparatus according to claim 16, wherein the apparatus further comprises:
an adding unit, configured to: before the second sending unit sends the second packet to the second network device by using the first fonvarding resource, add the identification information to the second packet based on that the second packet belongs to the service flow.

19. The apparatus according to any one of claims 16 to 18, wherein the apparatus further comprises:
a storage unit, configured to: after the second obtaining unit obtains the first forwarding resource based on the identification information of the first packet, establish a correspondence between the identification information and the first fonvarding resource, and store the correspondence in a fonvarding table of the first network device.

20. The apparatus according to claim 19, wherein the second sending unit comprises:
a first determining subunit, configured to determine, based on the identification information of the second packet and the correspondence, the first forwarding resource corresponding to the identification information; and
a sending subunit, configured to send the second packet to the second network device by using the first fonvarding resource.

21. The apparatus according to any one of claims 16 to 18, wherein the second obtaining unit comprises:
a first obtaining subunit, configured to obtain the first forwarding resource based on a stored correspondence table and the identification information, wherein the correspondence table includes a correspondence between the identification information and the first forwarding resource; or
a first sending subunit, configured to send a request message to the controller, wherein the request message comprises the identification information; and
a first receiving subunit, configured to receive a response message sent by the controller, wherein the response message comprises the first forwarding resource corresponding to the identification information.

22. The apparatus according to any one of claims 16 to 21, wherein the first packet further comprises attribute information, wherein the attribute information comprises a constraint condition used to obtain the first forwarding resource, and the second obtaining unit is specifically configured to determine, based on the attribute information, the first forwarding resource corresponding to the identification information.

23. The apparatus according to claim 16, wherein a next hop of the first network device comprises the second network device and a third network device, load balancing is formed between the second network device and the third network device, the second packet belongs to a first part of the service flow, and the apparatus further comprises:
a third obtaining unit, configured to obtain a second forwarding resource based on the identification information, wherein the second forwarding resource is a resource required by the first network device to forward a second part of the service flow to the third network device; and
a third sending unit, configured to send a third packet to the third network device by using the second forwarding resource, wherein the third packet comprises the identification information, and the third packet belongs to the second part of the service flow.

24. The apparatus according to claim 23, wherein the first forwarding resource and the second forwarding resource are determined based on the identification information and a load balancing policy of the first network device.

25. The apparatus according to claim 23 or 24, wherein the apparatus further comprises:
a storage unit, configured to: after the first forwarding resource and the second forwarding resource are obtained based on the identification information, establish a correspondence between the identification information and each of the first forwarding resource and the second forwarding resource, and store the correspondence in a forwarding table of the first network device.

26. The apparatus according to claim 16, wherein the first packet further comprises either of authentication information and resource release information.

27. The apparatus according to claim 26, wherein the apparatus further comprises:
a receiving unit, configured to: before the first packet is sent to the second network device, receive the first packet from a fourth network device, wherein the first packet further comprises the authentication information; and
a fourth obtaining unit, configured to obtain an authentication result based on the authentication information, wherein when the authentication result is that authentication succeeds, the first network device obtains the first forwarding resource based on the identification information of the first packet.

28. The apparatus according to claim 26, wherein the apparatus further comprises:
a receiving unit, configured to: before the first packet is sent to the second network device, receive the first packet from a fourth network device, wherein the first packet further comprises the resource release information; and
a release unit, configured to: when no packet that belongs to the service flow is received within a time period indicated by the resource release information, release, by the first network device, the first forwarding resource.

29. The apparatus according to claim 16, wherein when the first network device and the second network device belong to different network domains, the apparatus further comprises:
a receiving unit, configured to: before the first packet is sent to the second network device, receive the first packet from a fourth network device, wherein the first packet includes identification information before updating, and the identification information before updating is applied to a network domain to which the first network device and the fourth network device belong;
a fifth obtaining unit, configured to obtain the identification information based on the identification information before updating, wherein the identification information is applied to a network domain to which the second network device belongs; and
a replacement unit, configured to replace the identification information before updating in the first packet with the identification information.

30. The apparatus according to any one of claims 16 to 29, wherein the first packet also belongs to the service flow.

31. A network device, wherein the device comprises a processor and a memory, wherein
the memory is configured to store instructions; and
the processor is configured to execute the instructions in the memory, to perform the method according to any one of claims 1 to 15.

32. A computer-readable storage medium, wherein the computer-readable storage medium stores program code or instructions, and when the program code or instructions are run on a computer, the computer is enabled to perform the method according to any one of claims 1 to 15.
